# EUROPÄISCHE PATENTANMELDUNG

(11) **EP 4 660 570 A1**
(43) Veröffentlichungstag der Anmeldung: **10.12.2025**
(21) Anmeldenummer: 25179818.7
(22) Anmeldetag: 30.05.2025
(51) Int. Cl.: G01B 5/00, G01B 21/04

(54) **MESSMASCHINE**

(30) Priorität: 03.06.2024 DE 102024115312
(71) Anmelder: Carl Mahr Holding GmbH, 37073 Göttingen (DE)
(72) Erfinder: Staats, Michael, 37176 Nörten-Hardenberg (DE)
(74) Vertreter: Rüger Abel Patentanwälte PartGmbB

(57) **Zusammenfassung**

Die Erfindung betrifft eine Messmaschine (20) mit wenigstens einer translatorischen oder rotatorischen Maschinenachse, um einen Werkstückhalter (22) und eine Werkstück-Messeinheit (25) der Messmaschine (20) relativ zueinander zu bewegen und/oder zu positionieren. Die wenigstens eine Maschinenachse hat hierzu einen in einem translatorischen oder rotatorischen Bewegungsfreiheitsgrad (B1, B2) an einer zugeordneten Führung gelagerten Positionierkörper (40, 42, 44, 91), an dem ein Sensorträger (50) über eine Lageranordnung (51) gelagert ist. Die Lageranordnung (51) ist dazu eingerichtet, eine statisch bestimmte Lagerung des Sensorträgers (50) am Positionierkörper (40, 91) zu bewirken und gleichzeitig eine verspannungsfreie Lagerung zu gewährleisten. Auf diese Weise wird vermieden, dass Torsionen oder andere Verformungen des Positionierkörpers (40, 91), an dem der Sensorträger dem Werkstückhalter (22) und der Werkstück-Messeinheit (25) erfolgen.

## Beschreibung

Die Erfindung betrifft eine Messmaschine, die dazu eingerichtet ist, ein Werkstück mithilfe einer Werkstück-Messeinheit anzutasten und dabei ein Messsignal zu erzeugen. Basierend auf dem Messsignal kann unter Verwendung weiterer Sensorsignale ein Messwert ermittelt werden. Dabei ist es generell wünschenswert, eine möglichst genaue Messwertermittlung zu erreichen.

DE 197 11 500 A1 beschreibt ein Messsystem zur automatischen Feststellung und Korrektur von Positionsabweichungen, um die Messung von relativ zueinander bewegten Bestandteilen unbeeinflusst von thermischen Einwirkungen durchzuführen, indem die Abtasteinrichtungen, die eine Skala bzw. einen Maßstab zur Positionsbestimmung abtasten, direkt oder indirekt einer Maß- und Formverkörperung zugeordnet sind.

Aus DE 43 45 094 A1 ist eine Formmessmaschine mit einem Messarm bekannt, an dessen Ende ein Formmesssensor angeordnet ist. Der Messarm ist an einem bewegbaren Schlitten angeordnet. Ein Bezugssystem ist aus drei Normalen gebildet, um die Position der Tasteinrichtung im Raum bestimmen zu können.

Zum Kalibrieren eines Koordinatenmessgeräts mit Hilfe eines Referenzkörpers schlägt DE 10 2008 024 444 A1 vor, den Referenzkörper an mehreren Messpunkten anzutasten, um daraus Achsfehlerwerte des Koordinatenmessgeräts der zu kalibrierenden Koordinatenachse zu ermitteln.

Eine Referenzanordnung für ein Koordinatenmessgerät mit zumindest einer Linearachse ist aus DE 10 2019 134 940 A1 bekannt. Mittels der Referenzanordnung kann ein Referenzkörper entlang einer Führung bewegt werden, wobei der Referenzkörper einen Bezugspunkt definiert. Dieser Bezugspunkt kann als Referenzwert erfasst werden.

In DE 10 2013 102 477 A1 wird eine Positioniervorrichtung für einen Positioniertisch beschrieben, wobei eine Sensoranordnung zur Erfassung der Position des Positioniertisches vorhanden ist. Die Sensoranordnung kann beispielsweise optisch arbeiten und zur Positionsbestimmung eine Codierplatte mit Licht bestrahlen und das durch die Codierplatte erzeugte Lichtmuster in einem Fotoempfänger erfassen und zur Positionsbestimmung auswerten.

In DE 2 008 813 A1 wird eine Kompensationsvorrichtung und ein Kompensationsverfahren für einen Messkopf einer Messmaschine offenbart, um beispielsweise temperaturbedingte Einflüsse zu kompensieren. Hierzu wird eine temperaturbedingte Maßänderung gegenüber einer thermisch unbeeinflussten Stange ermittelt und kann auf diese Weise kompensiert werden.

Ein solches Verfahren ist auch in DE 10 2014 016 646 A1 beschrieben.

Ein temperaturkompensierter Eich-Maßstab gemäß DE 197 261 73 A1 hat zwei Stäbe mit unterschiedlichen thermischen Ausdehnungskoeffizienten, die in einer Ebene fixiert sind. An diesen Stäben sind Hebel angeordnet, die sich rechtwinklig zu den Stäben erstrecken und aufgrund der unterschiedlichen Ausdehnungskoeffizienten der Stäbe bleibt die Ausrichtung der Hebel aufrecht erhalten. Bei einem weiteren Ausführungsbeispiel werden Stäbe aus Aluminium an einer Grundplatte aus Stahl fixiert und sind wiederum mit weiteren Stäben aus Stahl an einem Ende gekoppelt. Hierbei wird der Effekt ausgenutzt, dass Aluminium die doppelte Temperaturausdehnung hat wie Stahl, so dass sich die Temperaturausdehnung des Aluminiumstabes gegenüber der Temperaturausdehnung des Stahlstabes und der Grundplatte in etwa aufhebt.

Aus DE 102 59 186 A1 ist eine Vorrichtung zur Aufnahme von Messinstrumenten, beispielsweise Interferometern, bekannt. Die Aufnahme besteht aus einem Material mit sehr geringem thermischen Wärmeausdehnungskoeffizienten, beispielsweise Glaskeramik oder eine Metalllegierung.

DE 34 47 162 A1 offenbart eine Axiallagerung für eine Gewindespindel mit einer Kugel, die zwischen zwei rechtwinkelig zur Axialrichtung ausgerichteten Stützflächen angeordnet ist und auf diesen Stützflächen abrollbar in einer Hülse gelagert ist.

Ausgehend vom Stand der Technik kann es als Aufgabe der vorliegenden Erfindung angesehen werden, eine Messmaschine zu verbessern und insbesondere die Messgenauigkeit zu erhöhen.

Diese Aufgabe wird durch eine Messmaschine mit den Merkmalen des Patentanspruches 1 gelöst.

Die Messmaschine gemäß der vorliegenden Erfindung ist dazu eingerichtet, einen Messwert eines Werkstücks zu ermitteln. Hierzu weist die Messmaschine einen Werkstückhalter zum Halten des Werkstücks sowie eine Werkstück-Messeinheit auf, mittels der ein Werkstück berührend oder berührungslos angetastet und dabei wenigstens ein Messsignal erzeugt werden kann.

Die Werkstück-Messeinheit kann abhängig von der Messaufgabe unterschiedlich ausgestaltet sein. Eine Werkstück-Messeinheit eines Typs kann beispielsweise einen Taster aufweisen, mit dem das Werkstück berührend angetastet werden kann. Eine Werkstück-Messeinheit eines weiteren Typs kann berührungslos arbeiten und hierzu eine oder mehrere optische Messeinrichtungen aufweisen, beispielsweise eine Lichtquelle und eine Kamera. Eine optische Messung kann beispielsweise im Durchlicht oder im Auflicht erfolgen. Es können auch Scanner, insbesondere Laserscanner, berührungslos arbeitende Abstandssensoren oder dergleichen in einer Werkstück-Messeinheit verwendet werden.

Die Messmaschine ist dazu eingerichtet, den Werkstückhalter und die Werkstück-Messeinheit relativ zueinander zu bewegen bzw. relativ zueinander zu positionieren, um einen das Werkstück an einer oder mehreren Messorten anzutasten. Hierzu weist die Messmaschine wenigstens eine Maschinenachse auf, die als erste Maschinenachse bezeichnet werden kann. Die erste Maschinenachse hat einen ersten Positionierkörper und eine erste Führung, an der der erste Positionierkörper in einem ersten Bewegungsfreiheitsgrad bewegbar gelagert ist und in diesem ersten Bewegungsfreiheitsgrad positioniert werden kann. Der erste Bewegungsfreiheitsgrad kann ein translatorischer oder rotatorischer Freiheitsgrad sein.

Um die Relativpositionierung zwischen dem Werkstückhalter bzw. einem am Werkstückhalter angeordneten Werkstück und der Werkstück-Messeinheit ausführen zu können, kann der Werkstückhalter oder die Werkstück-Messeinheit mittelbar oder unmittelbar am ersten Positionierkörper angeordnet sein. Beispielsweise kann die Werkstück-Messeinheit mit dem ersten Positionierkörper bewegungsgekoppelt sein, während der Werkstückhalter über eine andere Maschinenachse relativ zu einer Maschinenbasis bewegbar oder unbeweglich relativ zur Maschinenbasis angeordnet ist. Die erste Maschinenachse mit dem ersten Positionierkörper kann alternativ dazu verwendet werden, den Werkstückhalter zu bewegen und zu positionieren.

Die Messmaschine hat außerdem einen ersten Positionssensor, der dazu eingerichtet ist, die Relativbewegung und/oder Relativposition zwischen dem ersten Positionierkörper und der ersten Führung zu erfassen. Beispielsweise kann ein erster Maßstab an der ersten Führung und relativ zur ersten Führung unbeweglich angeordnet sein und der erste Positionssensor kann am ersten Positionierkörper angeordnet sein. Der Positionssensor und der Maßstab können zusammenarbeiten, um eine Bewegung und/oder eine Position des ersten Positionierkörpers im ersten Bewegungsfreiheitsgrad zu erfassen.

Die Messmaschine gemäß der vorliegenden Erfindung hat außerdem einen Sensorträger. An dem Sensorträger ist der erste Positionssensor angeordnet. Der Sensorträger ist wiederum mittels einer Lageranordnung am ersten Positionierkörper gelagert. Mittels der Lageranordnung ist der Sensorträger statisch bestimmt am Positionierkörper gelagert. Beispielsweise sind für die statisch bestimmte Lagerung in sämtlichen räumlichen Freiheitsgraden (drei translatorische und drei rotatorische Freiheitsgrade) sechs Lagerpunkte bzw. Lagerstellen vorhanden. Vorzugsweise ist für jeden räumlichen Freiheitsgrad eine separate, individuelle Lagereinheit vorhanden. Die Lageranordnung ist derart ausgebildet, dass jeder Freiheitsgrad separat und spielfrei abgestützt wird, ohne aber eine Abstützung in irgendeinem anderen Freiheitsgrad zu bewirken. Jeder der räumlichen Freiheitsgrade wird jeweils mittels Festlagerung in diesem Freiheitsgrad und mittels Loslagerung bzw. schwimmend in allen anderen räumlichen Freiheitsgraden abgestützt. Der Sensorträger ist somit statisch exakt bestimmt und verspannungsfrei oder schwimmend am ersten Positionierkörper gelagert.

Durch die verspannungsfreie bzw. schwimmende Lagerung des Sensorträgers am ersten Positionierkörper wird vermieden, dass Verspannungen oder Torsionen des ersten Positionierkörpers zu einer undefinierten Verformung des Sensorträgers führen und mithin zu einer undefinierten Position des ersten Positionssensors. Die Loslagerung bewirkt, dass Bewegungen und Verformungen des ersten Positionierkörpers jeweils zu einer Bewegung des Sensorträgers führen, die messtechnisch erfasst werden kann. Auf diese Weise ist es möglich, die Messung der Bewegung und/oder der Position des ersten Positionierkörpers im ersten Bewegungsfreiheitsgrad mittels des ersten Positionssensors mit hoher Genauigkeit durchzuführen.

Die Messmaschine kann eine Maschinenbasis aufweisen. Die Maschinenbasis definiert ein Maschinenkoordinatensystem. Die erste Führung kann unbeweglich relativ zum Maschinenkoordinatensystem angeordnet sein.

Die erste Führung kann bei einem Ausführungsbeispiel unbeweglich an der Maschinenbasis angeordnet sein und sich im ersten Bewegungsfreiheitsgrad, beispielsweise linear, von der Maschinenbasis weg erstrecken. Die erste Führung kann an einer - vorzugsweise vertikalen - Führungssäule angeordnet sein. An einer solchen Führungssäule kann der erste Maßstab angeordnet sein, mit dem der erste Positionssensor beispielsweise zusammenarbeitet.

Es ist bevorzugt, wenn am Sensorträger wenigstens eine Referenzsensorgruppe mit jeweils wenigstens einem Referenzsensor angeordnet ist. Der wenigstens eine Referenzsensor kann ein Abstandsensor sein und dazu eingerichtet sein, einen Abstand und/oder eine Abstandsänderung gegenüber einer Messfläche zu erfassen.

Wenn eine Referenzsensorgruppe mehrere mit Abstand zueinander angeordnete Referenzsensoren aufweist, die den Abstand und/oder eine Abstandsänderung gegenüber derselben Messfläche erfassen, können dadurch auch Rotationsbewegungen und/oder Kippbewegungen des Sensorträgers gegenüber der Messfläche erfasst werden, um eine oder mehrere Achsen, die parallel zur Messfläche ausgerichtet sind.

Die Messfläche kann eine Referenzfläche oder eine Bezugsfläche sein. Bei den hier beschriebenen Ausführungsbeispielen ist eine Referenzfläche eine relativ zum Maschinenkoordinatensystem unbeweglich angeordnete Messfläche und eine Bezugsfläche ist eine relativ zum Maschinenkoordinatensystem bewegliche Messfläche, die beispielsweise an einer bewegbar gelagerten Komponente (insbesondere Positionierkörper) einer der vorhandenen Maschinenachsen angeordnet ist.

Bei einem Ausführungsbeispiel ist am Sensorträger eine erste Referenzsensorgruppe vorhanden, wobei jeder Referenzsensor der ersten Referenzsensorgruppe dazu eingerichtet ist, einen Abstand und/oder eine Abstandsänderung des Sensorträgers zu einer ersten Referenzfläche zu erfassen. Die erste Referenzfläche ist parallel zum ersten Bewegungsfreiheitsgrad ausgerichtet und relativ zur ersten Führung unbeweglich angeordnet, beispielsweise an der Maschinenbasis oder der Führungssäule. Der Abstand bzw. die Abstandsänderung wird rechtwinklig zur ersten Referenzfläche und damit rechtwinklig zum ersten Bewegungsfreiheitsgrad erfasst. Insbesondere kann der Abstand bzw. die Abstandsänderung durch jeden Referenzsensor der ersten Referenzsensorgruppe in einem zweiten Bewegungsfreiheitsgrad eines zweiten Positionierkörpers der Messmaschine erfasst werden.

Wenn es sich bei dem ersten Bewegungsfreiheitsgrad um einen rotatorischen Freiheitsgrad handelt, erstreckt sich die erste Referenzfläche in Umfangsrichtung um die Drehachse dieses rotatorischen ersten Bewegungsfreiheitsgrades. Die erste Referenzfläche kann dabei in einer Richtung parallel zur Drehachse (Axialrichtung) und/oder in einer Richtung radial zur Drehachse (Radialrichtung) orientiert sein. Ein Normalenvektor der ersten Referenzfläche kann mit der Drehachse einen beliebigen Winkel von 0° bis 360° einschließen.

Bei einem Ausführungsbeispiel weist die erste Referenzsensorgruppe zwei Referenzsensoren auf, die in Richtung des ersten Bewegungsfreiheitsgrades mit Abstand zueinander und vorzugsweise entlang einer sich parallel zum ersten Bewegungsfreiheitsgrad erstreckenden Achse angeordnet sind.

Vorzugsweise messen der wenigstens eine Referenzsensor der ersten Referenzsensorgruppe und der erste Positionssensor in einer gemeinsamen Ebene, in der die erste Referenzfläche angeordnet ist. Hierzu kann beispielsweise der erste Maßstab in derselben Ebene angeordnet sein, wie die erste Referenzfläche.

Es ist außerdem vorteilhaft, wenn am Sensorträger eine zweite Referenzsensorgruppe angeordnet ist. Die zweite Referenzsensorgruppe hat wenigstens einen Referenzsensor, der dazu eingerichtet ist, einen Abstand und/oder eine Abstandsänderung des Sensorträgers zu einer oder mehreren Messflächen zu erfassen, insbesondere zu einer zweiten Referenzfläche. Vorzugsweise sind die erste Referenzfläche rechtwinklig und die zweite Referenzfläche rechtwinklig zueinander ausgerichtet. Mittels jedes Referenzsensors der der zweiten Referenzsensorgruppe kann ein Abstand und/oder eine Translationsbewegung des Sensorträgers rechtwinklig zur zweiten Referenzfläche erfasst werden. Wenn die zweite Referenzsensorgruppe mehrere Referenzsensoren aufweist, kann auch eine Kippbewegung um eine oder mehrere Achsen erfasst werden, die parallel zur zweiten Referenzfläche ausgerichtet sind.

Bei einem Ausführungsbeispiel hat die zweite Referenzsensorgruppe drei Referenzsensoren, die in einer Ebene parallel zu der wenigstens einen zugeordneten Messfläche mit Abstand zueinander angeordnet sind, sozusagen in einem Dreieck, so dass jeweils nur zwei der drei Referenzsensoren entlang einer gemeinsamen Grade angeordnet sind.

Bei einer bevorzugten Ausführungsform der Messmaschine ist eine zweite Maschinenachse mit einem zweiten Positionierkörper und einer zweiten Führung vorhanden. Der zweite Positionierkörper ist in einem translatorischen oder rotatorischen zweiten Bewegungsfreiheitsgrad bewegbar an der zweiten Führung gelagert und kann in dem zweiten Bewegungsfreiheitsgrad positioniert werden. Die zweite Führung ist am ersten Positionierkörper angeordnet. Dadurch kann beispielsweise ein Kreuzschlitten gebildet werden oder eine kombinierte Hub-Drehachse oder ähnliches.

Ein zweiter Positionssensor erfasst eine Bewegung und/oder Position des zweiten Positionierkörpers im zweiten Bewegungsfreiheitsgrad und ist hierfür am Sensorträger angeordnet. Insbesondere kann der zweite Positionssensor mit einem zweiten Maßstab zusammenarbeiten, der relativ zum zweiten Positionierkörper unbeweglich am zweiten Positionierkörper angeordnet ist.

Der erste Bewegungsfreiheitsgrad und der zweite Bewegungsfreiheitsgrad sind voneinander verschieden und können beispielsweise rechtwinklig zueinander ausgerichtete translatorische Freiheitsgrade sein. Bei einem anderen Ausführungsbeispiel kann der erste Bewegungsfreiheitsgrad ein translatorischer Freiheitsgrad und der zweite Bewegungsfreiheitsgrad ein rotatorischer Freiheitsgrad sein oder umgekehrt.

Es ist vorteilhaft, wenn die Messmaschine außerdem eine dritte Maschinenachse mit einem dritten Positionierkörper und einer dritten Führung aufweist. Der dritte Positionierkörper kann parallel zum zweiten Positionierkörper im zweiten Bewegungsfreiheitsgrad bewegbar an der dritten Führung gelagert sein und in dem zweiten Bewegungsfreiheitsgrad positioniert werden. Analog zum zweiten Positionierkörper kann auch die dritte Führung für den dritten Positionierkörper am ersten Positionierkörper angeordnet sein. Mittels eines dritten Positionssensors kann eine Bewegung und/oder eine Position des dritten Positionierkörpers im zweiten Bewegungsfreiheitsgrad erfasst werden. Der dritte Positionssensor ist dazu am Sensorträger angeordnet. Insbesondere kann der dritte Positionssensor mit einem dritten Maßstab zusammenarbeiten, der relativ zum dritten Positionierkörper unbeweglich am dritten Positionierkörper angeordnet ist.

An dem zweiten Positionierkörper und/oder am dritten Positionierkörper kann eine erste Bezugsfläche angeordnet sein, relativ zu der der wenigstens eine Referenzsensor der zweiten Referenzsensorgruppe einen Abstand und/oder eine Abstandsänderung erfasst. Eine am zweiten Positionierkörper vorhandene erste Bezugsfläche und der zweite Maßstab und/oder eine am dritten Positionierkörper vorhandene erste Bezugsfläche und der dritte Maßstab können jeweils in einer gemeinsamen Ebene angeordnet sein.

Bei einer vorteilhaften Ausgestaltung der Messmaschine kann außerdem eine am Sensorträger angeordnete dritte Referenzsensorgruppe mit wenigstens einem Referenzsensor vorhanden sein. Jeder Referenzsensor der dritten Referenzsensorgruppe ist dazu eingerichtet, einen Abstand und/oder eine Abstandsänderung des Sensorträgers zu einer am zweiten Positionierkörper angeordneten zweiten Bezugsfläche zu erfassen. Zusätzlich oder alternativ kann jeder Referenzsensor der dritten Referenzsensorgruppe dazu eingerichtet sein, einen Abstand und/oder eine Abstandsänderung des Sensorträgers zu einer am dritten Positionierkörper angeordneten dritten Bezugsfläche zu erfassen.

Die zweite Bezugsfläche und/oder die dritte Bezugsfläche ist parallel zum zweiten Bewegungsfreiheitsgrad uns vorzugsweise rechtwinklig zum ersten Bewegungsfreiheitsgrad ausgerichtet.

Es ist vorteilhaft, wenn jeder Referenzsensor wenigstens ein Sensorelement aufweist, das in einem Sensorgehäuse angeordnet ist. Das Sensorgehäuse ist an einer Befestigungsstelle am Sensorträger befestigt. Jedes Sensorelement hat eine der zugeordneten Messfläche (Referenzfläche oder Bezugsfläche) zugewandte Sensorfläche. Ausgehend von der Befestigungsstelle bis zu der Sensorfläche oder bis zu einer der Sensorflächen hat das Sensorgehäuse dieselbe thermische Längenausdehnung wie die wenigstens eine Komponente der Messmaschine, die die Befestigungsstelle am Sensorträger und die dem Sensorelement zugeordneten Messfläche verbindet. Bei dieser wenigstens einen Komponente handelt es sich zum einen um den Teil des Sensorträgers, an dem sich die Befestigungsstelle befindet und optional - sofern vorhanden - wenigstens ein sich daran anschließendes Halte- oder Führungsbauteil einer der vorhandenen Maschinenachsen. Das Sensorgehäuse dehnt sich zwischen der Befestigungsstelle und der Sensorfläche somit um denselben Betrag aus, wie die Komponenten oder Bauteile, die die Befestigungsstelle und die Messfläche (Referenzfläche oder Bezugsfläche) miteinander verbinden. Auf diese Weise können thermische Einflüsse teilweise oder vollständig eliminiert werden. Die Messung des Abstands bzw. der Abstandsänderung ist somit zumindest im Wesentlichen frei von thermischen Einflüssen.

Einer, mehrere oder alle Referenzsensoren einer Referenzsensorgruppe oder mehrerer Referenzsensorgruppen können bei einer Ausführungsform zwei Sensorelemente aufweisen, die als erstes Sensorelement und als zweites Sensorelement bezeichnet werden können. Jedes der Sensorelemente ist dazu eingerichtet, einen Abstand und/oder eine Abstandsänderung zu einer zugeordneten Messfläche (Referenzfläche oder Bezugsfläche) zu erfassen, wobei die Sensorflächen des ersten und zweiten Sensorelements eines gemeinsamen Referenzsensors dabei in entgegengesetzte Messrichtungen ausgerichtet sind. Dadurch kann ein Abstand zwischen den Messflächen ermittelt werden, z.B. zwischen einer Bezugsfläche und einer Referenzfläche.

Bei einer Ausgestaltung eines Referenzsensors mit zwei Sensorelementen kann das Sensorgehäuse derart ausgebildet sein, dass eine Distanz zwischen den Sensorflächen der beiden Sensorelemente durch thermische Einflüsse zumindest im Wesentlichen konstant bleibt.

Bei einer bevorzugten Ausführungsform kann diese thermische Unempfindlichkeit des Sensorgehäuses dadurch erreicht werden, dass das Sensorgehäuse mehrere relativ zueinander ausdehnbare Gehäuseteile aufweist, beispielsweise Gehäusehülsen, die zumindest im Wesentlichen koaxial zueinander angeordnet sind. Die Längenausdehnung dieser Gehäuseteile ist derart gewählt, dass sich ihre Längenausdehnungen zumindest im Wesentlichen gegenseitig aufheben. Insbesondere können hierzu zwei unmittelbar aneinander angrenzende Gehäuseteile an einem Ende fest miteinander verbunden sein, während sie am gegenüberliegenden Ende frei beweglich zueinander gelagert sind und sich daher durch thermische Einwirkung in ihrer Länge relativ zueinander ausdehnen können. Dabei ist an einem der Gehäuseteile das erste Sensorelement und an einem anderen der Gehäuseteile das zweite Sensorelement befestigt. Die Anzahl der Gehäuseteile, die das erste Sensorelement mit dem zweiten Sensorelement verbinden, kann ungerade sein, beispielsweise können drei Gehäuseteile vorhanden sein. Dabei kann ein mittleres Gehäuseteil einen doppelt so großen thermischen Ausdehnungskoeffizienten aufweisen, wie ein daran an einem Ende befestigtes inneres Gehäuseteil und ein am jeweils anderen Ende befestigtes äußeres Gehäuseteil. Zum Beispiel können das innere und das äußere Gehäuseteil aus Stahl oder einer Stahllegierung und das mittlere Gehäuseteil aus Aluminium oder einer Aluminiumlegierung bestehen.

Die Messmaschine kann eine Steuereinrichtung aufweisen, die beispielsweise dazu eingerichtet ist, einen oder mehrere Positionierkörper im jeweiligen Bewegungsfreiheitsgrad zu bewegen bzw. zu positionieren.

Die Steuereinrichtung kann auch mit der Werkstück-Messeinheit kommunikationsverbunden sein, so dass der Steuereinrichtung das wenigstens eine Messsignal der Werkstück-Messeinheit zur Verfügung steht. Die Steuereinrichtung kann außerdem mit dem wenigstens einen vorhandenen Positionssensor und dem wenigstens einen vorhandenen Referenzsensor kommunikationsverbunden sein, so dass der Steuereinrichtung außerdem wenigstens ein Positionssensorsignal und wenigstens ein Referenzsensorsignal zur Verfügung stehen. Die Steuereinrichtung ist dazu eingerichtet, aus dem wenigstens einen Messsignal, dem wenigstens einen Referenzsensorsignal und dem wenigstens einen Positionssensorsignal einen Messwert zu ermitteln, der das Werkstück an dem Messort am Werkstück charakterisiert, an dem das betreffende wenigstens eine Messsignal erzeugt wurde. Bei dem Messwert kann es sich beispielsweise um eine Position in einem Maschinenkoordinatensystem der Messmaschine handeln, der einen charakteristischen Punkt einer Oberfläche und/oder einer Kante angibt. Das wenigstens eine Positionssensorsignal kann und das wenigstens eine Referenzsensorsignal können miteinander verknüpft werden, um eine höhere Genauigkeit des Messwerts zu erreichen, als dies allein durch das wenigstens eine Positionssensorsignal möglich wäre.

Die Lageranordnung zur Lagerung des Sensorträgers am ersten Positionierkörper hat vorzugsweise mehrere separate Lagereinheiten, insbesondere sechs Lagereinheiten. Jede Lagereinheit ist dazu eingerichtet, den Sensorträger und den ersten Positionskörper in genau einer räumlichen Richtung abzustützen, die als Stütz- oder Lagerrichtung bezeichnet werden kann. Jede Lagereinheit ist dazu eingerichtet Relativbewegungen rechtwinkelig zu dieser Stütz- oder Lagerrichtung im Wesentlichen ungehindert zu ermöglichen.

Bei einem Ausführungsbeispiel hat jede Lagereinheit ein Wälzelement, beispielsweise eine Kugel, und vorzugsweise genau ein Wälzelement. Das Wälzelement stützt sich an einer Stützstelle am Sensorträger und an einer anderen Stützstelle am ersten Positionierkörper ab. Die beiden Stützstellen definieren eine Gerade, die vorzugsweise durch den Mittelpunkt oder die Mittelachse des Wälzelements hindurch verläuft. Die Stützstellen können sich bezüglich des Mittelpunkts oder der Mittelachse diametral gegenüberliegen.

Es ist bevorzugt, wenn jedes Wälzelement in einer elastisch verformbaren Lagerhülse angeordnet ist. Bei einer Krafteinwirkung schräg oder rechtwinklig zu der Graden, auf der die Stützstellen liegen, kann sich das Wälzelement der betreffenden Lagereinheit zwischen dem Sensorträger und dem ersten Positionierkörper abrollen bzw. abwälzen, so dass jede Lagereinheit ausschließlich eine Kraft entlang der Graden abstützen kann, auf der sich die Stützstellen befinden.

Insbesondere ist die elastisch verformbare Lagerhülse derart ausgeführt, dass eine Haftreibung und/oder eine Gleitreibung zwischen dem Wälzelement und der Lagerhülse kleiner ist als ein Anrollwiderstand und/oder ein Rollwiderstand des Wälzelements an den Stützstellen. Um dies zu erreichen, kann die Lagerhülse aus einem geeigneten Material bestehen, beispielsweise einem weichen, porösen Material, wie etwa Schaumstoff, das eine Materialpaarung mit dem Material des Wälzelements bildet, die eine ausreichend geringe Haft- bzw. Gleitreibung gewährleistet. Das Wälzelement besteht vorzugsweise aus Stahl oder einer Stahllegierung.

Mehrere Lagereinheiten der Lageranordnung können entlang einer gemeinsamen ersten Ebene angeordnet sein, derart, dass jede Lagereinheit eine Stützstelle in dieser ersten Ebene aufweist. Beispielsweise können drei Lagereinheiten jeweils eine Stützstelle in der ersten Ebene aufweisen. Die erste Ebene ist bei einem Ausführungsbeispiel parallel zum ersten Bewegungsfreiheitsgrad und/oder zum zweiten Bewegungsfreiheitsgrad ausgerichtet.

Zusätzlich oder alternativ können mehrere Lagereinheiten jeweils eine Stützstelle in einer gemeinsamen zweiten Ebene aufweisen. Die zweite Ebene kann rechtwinklig zur ersten Ebene ausgerichtet sein. Die zweite Ebene ist beispielsweise rechtwinklig zum ersten Bewegungsfreiheitsgrad ausgerichtet.

In einer Richtung, rechtwinklig zu der ersten Ebene und rechtwinklig zu der zweiten Ebene kann eine und insbesondere genau eine Lagereinheit vorhanden sein. Die Stützstellen dieser Lagereinheit liegen auf einer Graden, die rechtwinklig zu der ersten Ebene oder rechtwinklig zu der zweiten Ebene ausgerichtet ist und beispielsweise parallel zum ersten Bewegungsfreiheitsgrad orientiert ist.

In dieser Beschreibung dienen einem Gegenstand vorangestellte Zahlworte wie "erste" oder "zweite" oder "dritte", usw. nur der sprachlichen Unterscheidung der Gegenstände voneinander und beinhalten insbesondere keine Reihenfolge oder Priorisierung, solange dies nicht explizit erwähnt ist. Beispielsweise könnten ein erster Positionierkörper und ein dritter Positionierkörper vorhanden sein, ohne dass ein zweiter Positionierkörper zwingend erforderlich ist. Dasselbe gilt auch für die anderen Gegenstände, die auf diese Weise sprachlich voneinander unterschieden werden.

Vorteilhafte Ausgestaltungen der Erfindung ergeben sich aus den abhängigen Ansprüchen, der Beschreibung und der Zeichnung. Nachfolgend werden bevorzugte Ausführungsbeispiele anhand der beigefügten Zeichnung im Einzelnen erläutert. In der Zeichnung zeigen:
Figur 1 eine perspektivische schematische Darstellung eines Ausführungsbeispiels einer Messmaschine,
Figur 2 eine schematische Prinzipdarstellung mehrerer Positionierkörper, die jeweils in einem linearen Bewegungsfreiheitsgrad bewegbar in einer Führung gelagert sind sowie eines Sensorträgers, der an einem ersten Positionierkörper mittels einer Lageranordnung angeordnet ist,
Figur 3 die schematische Darstellung aus Figur 2 mit Blick in einer anderen Richtung,
Figur 4 eine perspektivische Darstellung eines Ausführungsbeispiels des Sensorträgers aus den Figuren 1 und 2 in einer ersten Ansicht,
Figur 5 das Ausführungsbeispiel des Sensorträgers aus Figur 4 in einer anderen perspektivischen Darstellung,
Figur 6 eine Teildarstellung eines Ausführungsbeispiels der Messmaschine in einer Schnittebene parallel zu einem ersten Bewegungsfreiheitsgrad und rechtwinklig zu einem zweiten Bewegungsfreiheitsgrad, wobei mehrere Positionierkörper sowie der Sensorträger und daran angeordnete Referenzsensoren zu erkennen sind,
Figur 7 eine Prinzipdarstellung einer Lagereinheit der Lageranordnung zur Lagerung des Sensorträgers an einem ersten Positionierkörper,
Figur 8 eine Prinzipdarstellung eines Ausführungsbeispiels eines Referenzsensors in einer thermisch unempfindlichen Anordnung und Ausführung,
Figuren 9 und 10 jeweils einen Längsschnitt durch ein Ausführungsbeispiel eines Referenzsensors mit zwei Sensorelementen,
Figur 11 eine perspektivische Darstellung eines Ausführungsbeispiels eines Drehtellers mit einer Werkstückhalterung, wobei der Drehteller einen ersten Positionierkörper aufweist, der in einem rotatorischen ersten Freiheitsgrad um die Drehachse bewegbar und positionierbar ist,
Figur 12 ein Schnittbild durch den Drehteller aus Figur 11 in einer Schnittebene entlang der Drehachse,
Figur 13 eine Prinzipdarstellung eines Sensorträgers für den Drehteller aus Figuren 11 und 12 und
Figur 14 eine Prinzipdarstellung eines Ausführungsbeispiels zur Anordnung von Referenzsensoren am Drehteller gemäß der Figuren 11 und 12.

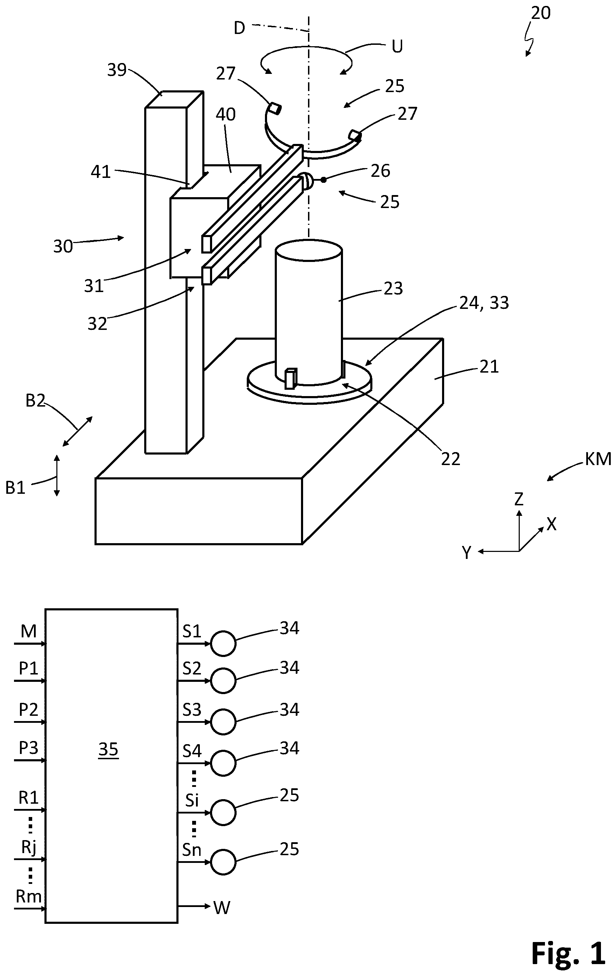

Figur 1 zeigt in einer perspektivischen vereinfachten Darstellung eine Messmaschine 20. Die Messmaschine 20 hat eine Maschinenbasis 21, wobei ein Maschinenkoordinatensystem KM unbeweglich fixiert relativ zur Maschinenbasis 21 definiert ist. Das Maschinenkoordinatensystem KM kann beispielsweise ein kartesisches Koordinatensystem sein mit einer X-Richtung, einer Y-Richtung und einer Z-Richtung.

Die Messmaschine 20 hat einen Werkstückhalter 22 für ein Werkstück 23. Der Werkstückhalter 22 kann Spanneinrichtungen zum Einspannen des Werkstücks 23 oder andere Stütz- oder Klemmteile aufweisen. Er ist dazu eingerichtet, das Werkstück 23 während der Messung zu halten und optional zu bewegen. Zu diesem Zweck kann der Werkstückhalter 22 beispielsweise einen um eine Drehachse D drehbaren Drehteller 24 aufweisen.

Messmaschine 20 weist außerdem wenigstens eine Werkstück-Messeinheit 25 auf. Bei dem in Figur 1 schematisch dargestellten Ausführungsbeispiel kann die Messmaschine 20 gleichzeitig zwei unterschiedliche Werkstück-Messeinheiten 25 aufweisen. Jede Werkstück-Messeinheit 25 ist dazu eingerichtet, wenigstens ein Messsignal M beim Antasten des Werkstücks 23 zu erzeugen. Das Antasten des Werkstücks 23 an einem Messort auf der Werkstückoberfläche kann berührend, beispielsweise mit einem taktilen Taster 26 einer Werkstück-Messeinheit 25, oder berührungslos erfolgen. Zum berührungslosen Antasten kann eine Werkstück-Messeinheit 25 beispielsweise wenigstens eine optische Messeinrichtung 27 aufweisen, wie beispielsweise eine Lichtquelle und einen Lichtempfänger (z.B. Kamera). Eine derartige optische Messeinrichtung 27 kann, wie schematisch in Figur 1 dargestellt, im Durchlicht arbeiten und/oder alternativ zur Messwerterfassung im Auflicht eingerichtet sein. Auch andere berührungslos arbeitende Werkstück-Messeinheiten 25 können eingesetzt werden, wie beispielsweise Scanner, insbesondere Laserscanner, oder Messeinrichtungen, die kapazitiv und/oder induktiv arbeiten.

Zur Relativbewegung und/oder Relativpositionierung der wenigstens einen Werkstück-Messeinheit 25 relativ zum Werkstückhalter 22 bzw. einem darin gehaltenen Werkstück 23 weist die Messmaschine 20 wenigstens eine und beim Ausführungsbeispiel mehrere Maschinenachsen auf, die eine Bewegung und/oder Positionierung in jeweils einem translatorischen oder rotatorischen Freiheitsgrad durchführen können. Dabei kann eine Maschinenachse die wenigstens eine Werkstück-Messeinheit 25 relativ zur Maschinenbasis 21 bewegen und/oder Positionieren oder den Werkstückhalter 22 bzw. das Werkstück 23 relativ zur Maschinenbasis 21 bewegen und/oder positionieren. Derartige Maschinenachsen können beliebig miteinander kombiniert werden.

Beim Ausführungsbeispiel der Messmaschine 20 nach Figur 1 sind wenigstens zwei oder drei translatorische Maschinenachsen und eine rotatorische Maschinenachse vorhanden. Beispielsweise ist eine erste Maschinenachse 30 eine translatorische Maschinenachse in Z-Richtung, eine zweite Maschinenachse 31 ist eine translatorische Maschinenachse in X-Richtung und eine dritte Maschinenachse 32 ist eine weitere translatorische Maschinenachse in X-Richtung. Eine beispielsgemäß vorhandene vierte Maschinenachse 33 ist eine rotatorische Maschinenachse in einer Umfangsrichtung U um eine Drehachse D. Beispielsgemäß erstreckt sich die Drehachse D in Z-Richtung. Die Z-Richtung ist beim Ausführungsbeispiel der Messmaschine 20 gemäß Figur 1 eine Vertikalrichtung.

Bei einer abgewandelten Ausführungsform könnte die Messmaschine 20 auch eine andere Kombination von Maschinenachsen aufweisen. Beispielsweise könnte optional zusätzlich eine translatorische Maschinenachse in Y-Richtung vorhanden sein. Prinzipiell könnte auch eine der beiden in X-Richtung translatorischen Maschinenachsen entfallen.

Jede Maschinenachse 30 bis 33 hat eine sich im jeweiligen Bewegungsfreiheitsgrad erstreckende Führung, entlang der ein zugeordneter Positionierkörper geführt bewegbar und positionierbar ist. Zur Bewegung und Positionierung hat jede Maschinenachse 30 bis 33 einen zugeordneten Achsantrieb 34. Die Achsantriebe 34 sind in Figur 1 lediglich schematisch nach Art eines Blockschaltbildes dargestellt und können jeweils einen Elektromotor aufweisen. Mittels einer Steuereinrichtung 35 können die Achsantriebe 34 individuell über ein zugeordnetes Steuersignal Si (i = 1, 2, 3, ..., n) angesteuert werden. Auch zusätzliche Antriebe für die wenigstens eine Werkstück-Messeinheit 25 können - sofern vorhanden - durch ein entsprechendes Steuersignal Si der Steuereinrichtung 35 angesteuert werden.

Der Steuereinrichtung 35 wird außerdem das wenigstens eine Messsignal M der wenigstens einen Werkstück-Messeinheit 25 bereitgestellt. Gemeinsam mit weiteren Sensorwerten kann in der Steuereinrichtung 35 daraus ein Messwert W ermittelt und beispielsweise über eine Schnittstelle der Messmaschine 20 angezeigt und/oder gespeichert und/oder an eine externe Rechen- oder Speichereinheit übermittelt werden. Der Messwert W kann bevorzugt einen Positionswert darstellen, der neben einer Ermittlung und/oder Auswertung eines das Werkstück 23 beschreibenden Wertes auch für eine optimierte/korrigierte Positionierung der Werkstück-Messeinheit 25 verwendbar ist.

Die Messmaschine 20 kann eine Führungssäule 39 aufweisen, die von der Maschinenbasis 21 wegragt, beispielsweise in Z-Richtung. Die Z-Richtung kann in Gebrauchslage der Messmaschine 20 vertikal ausgerichtet sein.

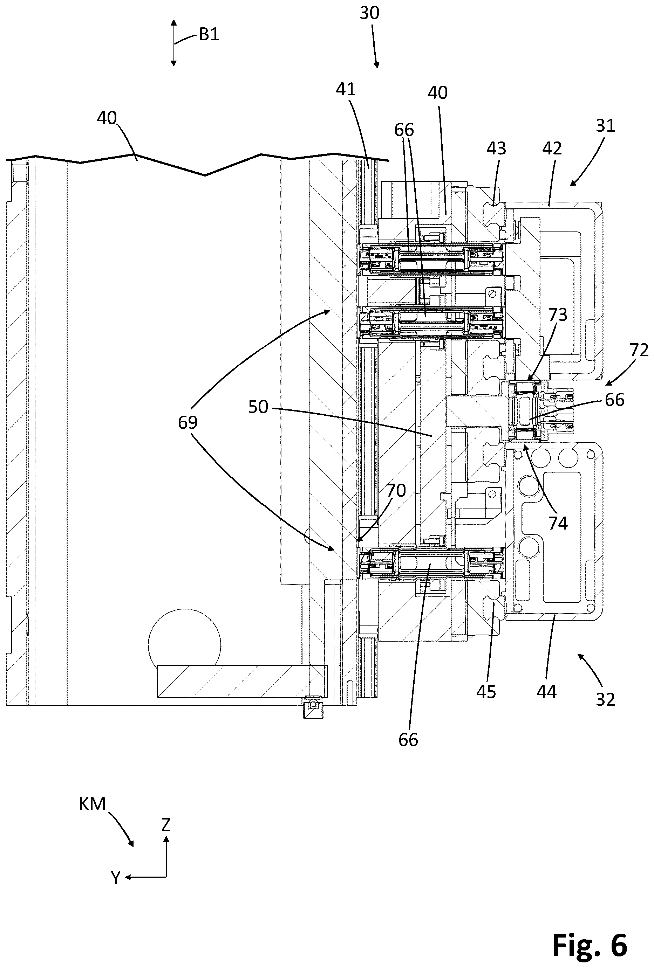

Beim Ausführungsbeispiel hat die erste Maschinenachse 30 einen ersten Positionierkörper 40, der in einem ersten translatorischen Bewegungsfreiheitsgrad B1 entlang einer ersten Führung 41 bewegbar und positionierbar gelagert ist (Figuren 1-3 und 6). Analog hierzu hat die zweite Maschinenachse 31 einen zweiten Positionierkörper 42, der in einem translatorischen zweiten Bewegungsfreiheitsgrad B2 entlang einer zweiten Führung 43 bewegbar und positionierbar gelagert ist. Die dritte Maschinenachse 32 hat einen dritten Positionierkörper 44, der entlang einer dritten Führung 45 im translatorischen zweiten Bewegungsfreiheitsgrad B2 bewegbar und positionierbar gelagert ist.

Die erste Führung 41 ist beispielsgemäß unbeweglich relativ zur Maschinenbasis 21 bzw. dem Maschinenkoordinatensystem KM an der Führungssäule 39 angeordnet.

Der erste Bewegungsfreiheitsgrad B1 ist beim Ausführungsbeispiel in Z-Richtung orientiert, während der zweite Bewegungsfreiheitsgrad B2 in X-Richtung orientiert ist. Die zweite Führung 43 und die dritte Führung 45 sind am ersten Positionierkörper 40 angeordnet. Der zweite Positionierkörper 42 und der dritte Positionierkörper 44 tragen jeweils eine Werkstück-Messeinheit 25, die somit jeweils im ersten Bewegungsfreiheitsgrad B1 und im zweiten Bewegungsfreiheitsgrad B2 relativ zur Maschinenbasis 21 bewegt und positioniert werden kann.

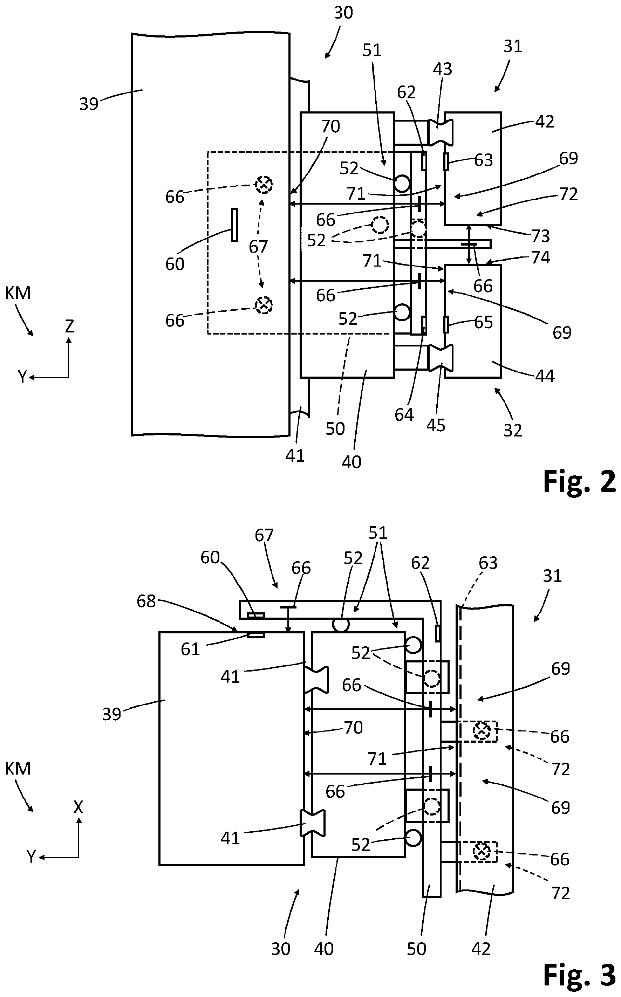

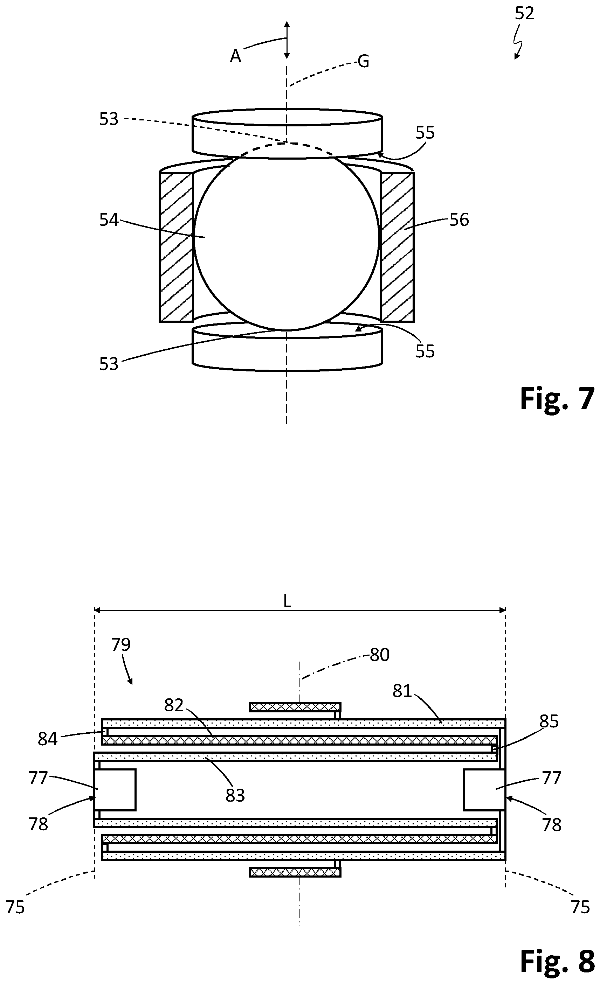

Die Messmaschine 20 weist einen Sensorträger 50 auf, der über eine Lageranordnung 51 am ersten Positionierkörper 40 gelagert ist (Figuren 2-6). Die Lageranordnung 51 ist dazu eingerichtet, den Sensorträger 50 statisch bestimmt am ersten Positionierkörper 40 zu lagern. Die Position des Sensorträgers 50 relativ zum ersten Positionierkörper 40 ist daher in sämtlichen Freiheitsgraden im Maschinenkoordinatensystem KM definiert. Hierzu weist die Lageranordnung 51 mehrere und beispielsgemäß sechs Lagerpunkte oder Lagerstellen zwischen dem ersten Positionierkörper 40 und dem Sensorträger 50 auf, wobei jeder Lagerpunkt bzw. jede Lagerstelle durch eine Lagereinheit 52 der Lageranordnung 51 gebildet ist. Die Lagereinheiten 52 sind in den Figuren 2 und 3 schematisch durch Kugeln bzw. Kreise dargestellt. Ein Ausführungsbeispiel einer Lagereinheit 52 ist in Figur 7 dargestellt.

Jede Lagereinheit 52 der Lageranordnung 51 stützt den Sensorträger 50 am ersten Positionierkörper 40 in nur einer Stützrichtung A, also in einem einzigen Freiheitsgrad ab. Die Stützrichtung A erstreckt sich entlang einer Graden G zwischen zwei Stützstellen 53 der Lagereinheit 52. Die Lagereinheit 52 kann lediglich Kräfte abstützen, die entlang der Graden G zwischen den Stützstellen 53 wirken. Schräg oder rechtwinklig zu dieser Graden G auf die Lagereinheit 52 einwirkende Kräfte werden durch die Lagereinheit 52 nicht abgestützt.

In einer Lagerstelle bzw. in wenigstens einer der Lagereinheiten 52 kann eine nicht dargestellte Krafterzeugungseinrichtung vorhanden sein (wie zum Beispiel ein elastisch kompressibler Körper und/oder eine Feder und/oder ein Magnet, usw.), die dazu eingerichtet ist, eine Haltekraft zu erzeugen. Die Krafterzeugungseinrichtung kann beispielsweise konzentrisch um die Stützrichtung A angeordnet sein. Die Haltekraft kann entlang der Stützrichtung A zentrisch fluchtend wirken. Diese Krafterzeugungseinrichtung muss nicht in jeder Lagerstelle bzw. Lagereinheiten 52 vorhanden sein. Vorzugsweise ist zumindest eine Krafterzeugungseinrichtung vorhanden, deren Haltekraft in eine horizontale Richtung des Maschinenkoordinatensystems KM wirkt, beispielsweise eine Krafterzeugungseinrichtung für eine Haltekraft in X-Richtung und/oder eine Krafterzeugungseinrichtung für eine Haltekraft in Y-Richtung des Maschinenkoordinatensystems KM. Eine Krafterzeugungseinrichtung für eine Haltekraft in die beispielsgemäß vertikale Z-Richtung des Maschinenkoordinatensystems KM kann optional vorhanden sein, aber diese Haltekraft kann alternativ auch durch die Schwerkraft erzeugt werden.

Die Lagereinheit 52 hat beim Ausführungsbeispiel genau ein Wälzelement 54, das vorzugsweise als Kugel ausgeführt ist. Das Wälzelement 54 liegt an jeder Stützstelle 53 an einer Stützfläche 55 an. Der Abstand der Stützflächen 55 in Stützrichtung A bzw. der Abstand der Stützstellen 53 in Stützrichtung A entspricht beispielsgemäß dem Kugeldurchmesser und ist insbesondere konstant. Die Grade G erstreckt sich beispielsgemäß durch den Mittelpunkt der Kugel.

Die eine Stützfläche 55 ist am Sensorträger 50 und die andere Stützfläche 55 ist am ersten Positionierkörper 40 angeordnet. Die Stützflächen 55 können dabei an einem separaten Stützkörper angeordnet sein oder integraler bzw. monolithischer Bestandteil des Sensorträgers 50 bzw. des ersten Positionierkörpers 40 sein.

Beim Ausführungsbeispiel besteht die Kugel bzw. das Wälzelement 54 aus Stahl oder einer Stahllegierung oder einer anderen metallischen Legierung. Die Stützflächen 55 sind vorzugsweise ebenfalls aus Stahl oder einer Stahllegierung oder einer metallischen Legierung.

Das beispielsgemäß kugelförmige Wälzelement 54 kann sich quer zur Stützrichtung A zwischen den beiden Stützflächen 55 abwälzen. Somit erlaubt jede der Lagereinheiten 52 eine Relativbewegung zwischen dem Sensorträger 50 und dem ersten Positionierkörper 40 in sämtlichen Richtungen, die rechtwinklig zur jeweiligen Stützrichtung A ausgerichtet sind.

Wie es in Figur 7 gezeigt ist, kann zur Lagerung des Wälzelements 54 eine Lagerhülse 56 aufweisen. Die Lagerhülse 56 umgibt das Wälzelement 54 in einer Umfangsrichtung um die Grade G. Die Lagerhülse 56 ist beispielsgemäß elastisch. Sie kann beim Abwälzen des kugelförmigen Wälzelements 54 durch die dabei auftretenden Kräfte elastisch verformt werden. Beispielsweise kann die Lagerhülse 56 aus einem Schaumstoffmaterial bestehen. An ihrer dem Wälzelement 54 abgewandten Außenseite kann sich die Lagerhülse 56 mittelbar oder unmittelbar am Sensorträger 50 oder am ersten Positionierkörper 40 abstützen.

Die Materialpaarung zwischen dem Material der Lagerhülse 56 und dem Material des Wälzelements 54 und/oder die Elastizität der Lagerhülse 56 ist derart gewählt, dass die Haftreibung und die Gleitreibung zwischen der Lagerhülse 56 und dem Wälzelement 54 kleiner sind als der Anrollwiderstand und der Rollwiderstand des Wälzelements 54 auf den Stützflächen 55. Dadurch ist gewährleistet, dass die Lagerhülse 56 ein Abwälzen des Wälzelements 54 zwischen den Stützflächen 55 nicht blockiert und allenfalls geringfügig beeinflusst. Bei den auftretenden auf die Lagereinheit 52 einwirkenden Kräften ist die Ausgestaltung derart, dass sich das Wälzelement 54 stets abwälzen kann.

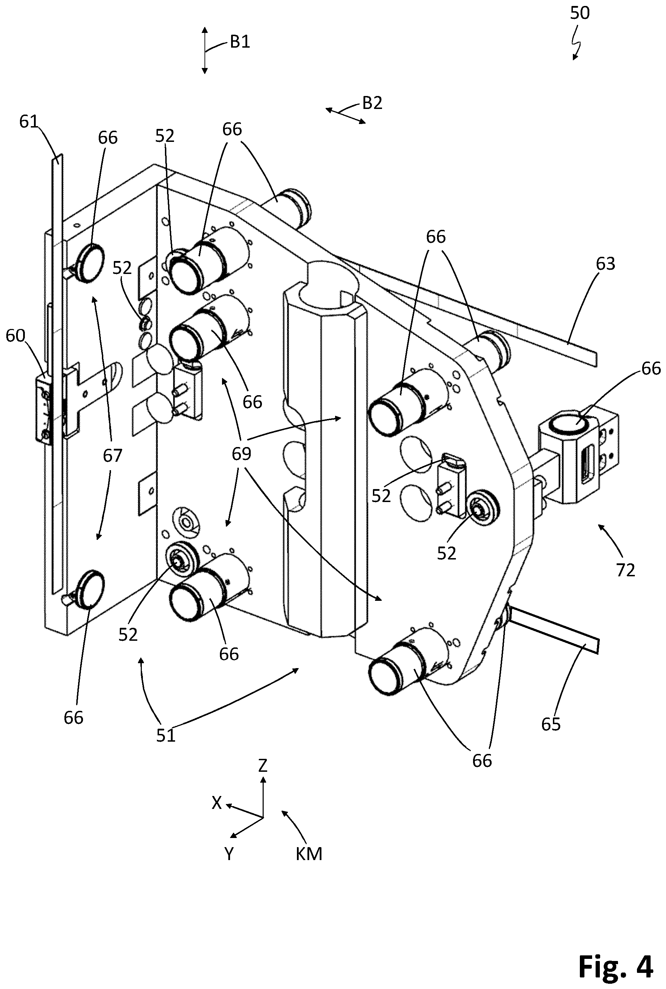

Wie es in Figur 4 zu erkennen ist, sind die Lagereinheiten 52 der Lageranordnung 51 gruppiert. Innerhalb einer Gruppe haben sämtliche Lagereinheiten 52 Graden G, die parallel zueinander ausgerichtet sind, wobei die Stützstellen 53 vorzugsweise in zwei zueinander parallelen Ebenen angeordnet sind. Bei einer ersten Gruppe - beispielsgemäß drei Lagereinheiten 52 - erstrecken sich die Graden G in Y-Richtung. Bei einer zweiten Gruppe - beispielsgemäß zwei Lagereinheiten 52 - erstrecken sich die Graden G in Z-Richtung und bei einer dritten Gruppe - beispielsgemäß einer einzigen Lagereinheit 52 - erstrecken sich die Graden bzw. erstreckt sich die Grade G in X-Richtung. Die Anzahl der Lagereinheiten 52 pro Gruppe könnten auch anders aufgeteilt sein, wobei insgesamt stets genau sechs Lagereinheiten vorhanden sind, so dass der Sensorträger 50 statisch bestimmt, aber nicht überbestimmt am ersten Positionierkörper 40 gelagert ist.

Jeder der Lagereinheiten 52 der Lageranordnung 51 bildet eine Festlagerung in Stützrichtung A und eine Loslagerung in alle Richtungen rechtwinkelig zur Stützrichtung A. Der Sensorträger 50 ist mittels jeder Lagereinheit 52 schwimmend am ersten Positionierkörper 40 gelagert. Bei Torsionen oder Verformungen des ersten Positionierkörpers 40 werden diese Verformungen nicht auf den Sensorträger 50 übertragen, sondern aufgrund der Lagerung des Sensorträgers 50 wird vielmehr auch bei einer Torsion oder Verformung des ersten Positionierkörpers 40 eine definierte Bewegung des Sensorträgers 50 in einem oder in mehreren Freiheitsgraden bewirkt. Der Sensorträger 50 ist daher auch bei äußeren Einflüssen, insbesondere thermischen Einflüssen, stets spannungs- und verformungsfrei.

Zur Bestimmung des Messwertes W ist es erforderlich, die Relativposition zwischen dem Werkstück 23 und der zum Antasten oder Messwertaufnahme eingerichteten Werkstück-Messeinheit 25 zu kennen. An dem Sensorträger 50 sind daher mehrere Sensoren angeordnet, um die Position der wenigstens einen Werkstück-Messeinheit 25 im Maschinenkoordinatensystem KM zu ermitteln. Hierzu ist jeder Maschinenachse 30-32, mittels der die wenigstens einen Werkstück-Messeinheit 25 positionierbar ist, jeweils ein Positionssensor zugeordnet.

Beispielsgemäß ist ein erster Positionssensor 60 vorhanden, der dazu eingerichtet ist, eine Bewegung und/oder eine Position des Sensorträgers 50 im ersten Bewegungsfreiheitsgrad B1 zu erfassen. Der erste Positionssensor 60 stellt der Steuereinrichtung 35 ein entsprechendes erstes Positionssensorsignal P1 bereit (Figuren 1, 4 und 5).

Beim Ausführungsbeispiel arbeitet der erste Positionssensor 60 mit einem ersten Maßstab 61 zusammen, der unbeweglich relativ zum Maschinenkoordinatensystem KM angeordnet ist, beispielsweise unbeweglich mit der ersten Führung 41 verbunden ist.

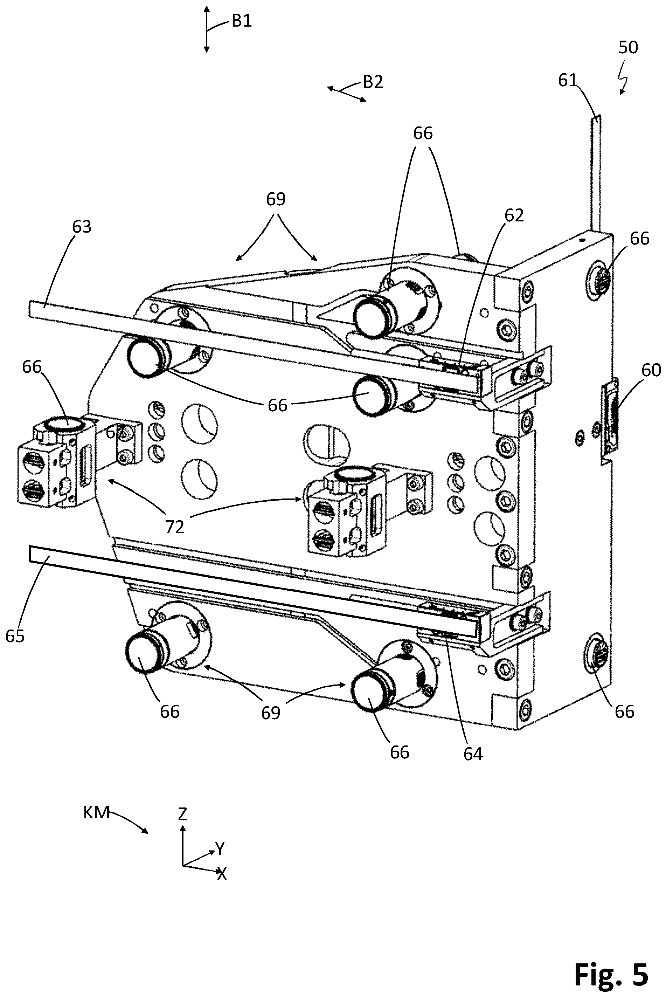

Die zweite Maschinenachse 31 weist einen zweiten Positionssensor 62 auf, der am Sensorträger 50 angeordnet ist, und der dazu eingerichtet ist, eine Bewegung und/oder eine Position des zweiten Positionierkörpers 42 im zweiten Bewegungsfreiheitsgrad B2 zu erfassen. Hierzu kann der zweite Positionssensor 62 beispielsweise mit einem zweiten Maßstab 63 zusammenarbeiten, der unbeweglich am zweiten Positionierkörper 42 angeordnet ist (Figur 5).

Dem dritten Positionierkörper 44 ist ein dritter Positionssensor 64 zugeordnet, der am Sensorträger 50 angeordnet ist. Der dritte Positionssensor 64 ist dazu eingerichtet, eine Bewegung und/oder eine Position des dritten Positionierkörpers 44 im zweiten Bewegungsfreiheitsgrad B2 zu erfassen. Er kann hierfür mit einem dritten Maßstab 65 zusammenarbeiten, der relativ zum dritten Positionierkörper 44 unbeweglich am dritten Positionierkörper 44 angeordnet ist (Figur 5).

Der zweite Positionssensor 62 stellt ein zweites Positionssensorsignal P2 und der dritte Positionssensor 64 ein drittes Positionssensorsignal P3 für die Steuereinrichtung 35 bereit (Figur 1). Mittels des ersten Positionssignals P1 und des zweiten Positionssignals P2 kann somit die Position des zweiten Positionierkörpers 42 und mittels des ersten Positionssignals P1 und des dritten Positionssignals P3 kann die Position des dritten Positionierkörpers 44 im Maschinenkoordinatensystem KM ermittelt werden.

Die Positionssensoren 60, 62, 64 arbeiten vorzugsweise berührungslos mit dem jeweils zugeordneten Maßstab 61 bzw. 63 bzw. 65 zusammen, beispielsweise optisch und/oder elektromagnetisch, um eine Relativbewegung oder einer Position im jeweiligen Bewegungsfreiheitsgrad B1 oder B2 zu detektieren.

Zur Erhöhung der Genauigkeit bei der Positionsermittlung weist der Sensorträger 50 beim Ausführungsbeispiel wenigstens eine Referenzsensorgruppe mit jeweils wenigstens einem Referenzsensor 66 auf. Jeder Referenzsensor 66 ist vorzugsweise als Abstandssensor ausgebildet, beispielsweise als kapazitiv messender Abstandssensor. Der wenigstens eine Referenzsensor 66 ist dazu eingerichtet, einen Abstand und/oder eine Abstandsänderung zwischen dem Referenzsensor 66 und einer zugeordneten Messfläche 75 zu detektieren. Bei dieser Messfläche 75 kann es sich um eine unbeweglich im Maschinenkoordinatensystem KM angeordnete Referenzfläche oder um eine unbeweglich an einem Positionierkörper 40, 42, 44 angeordnete Bezugsfläche handeln, wie es nachfolgend noch genauer beschrieben wird. Vorzugsweise ist jede Messfläche 75 eine in einer oder zwei Raumrichtungen ebene Fläche. Jede Messfläche 75 kann rechtwinklig zu einer der Richtungen X, Y, Z des Maschinenkoordinatensystems KM ausgerichtet sein.

Bei dem hier veranschaulichten Ausführungsbeispiel ist an dem Sensorträger 50 eine erste Referenzsensorgruppe 67 mit wenigstens einem Referenzsensor 66 angeordnet. Die erste Referenzsensorgruppe 67 weist beispielsgemäß zwei in Richtung des ersten Bewegungsfreiheitsgrades B1 (hier: Z-Richtung) mit Abstand zueinander angeordnete Referenzsensoren 66 auf. Die beiden Referenzsensoren 66 der ersten Referenzsensorgruppe 67 sind hier entlang einer Linie angeordnet, die sich parallel zum ersten Bewegungsfreiheitsgrad B1 erstreckt. Alternativ hierzu könnten sie nicht nur in Richtung des ersten Bewegungsfreiheitsgrades B1, sondern zusätzlich auch rechtwinklig hierzu versetzt zueinander angeordnet sein, beispielsweise in Y-Richtung des Maschinenkoordinatensystems KM.

Die Referenzsensoren 66 der ersten Referenzsensorgruppe 67 sind dazu eingerichtet, einen Abstand und/oder eine Abstandsänderung gegenüber einer ersten Referenzfläche 68 zu detektieren. Die erste Referenzfläche 68 kann unbeweglich mittelbar oder unmittelbar an der ersten Führung 41 angeordnet sein, beispielsweise an der Führungssäule 39.

Die erste Referenzfläche 68 ist schematisch in Figur 3 zu erkennen. Sie ist beim Ausführungsbeispiel in einer gemeinsamen Ebene mit dem ersten Maßstab 61 angeordnet, wobei diese Ebene beispielsgemäß parallel zum ersten Bewegungsfreiheitsgrad B1 und rechtwinklig zum zweiten Bewegungsfreiheitsgrad B2 ausgerichtet ist.

An dem Sensorträger 50 ist ferner eine zweite Referenzsensorgruppe 69 angeordnet, die für jeden vorhandenen im zweiten Bewegungsfreiheitsgrad B2 bewegbaren Positionierkörper 42, 44 jeweils mehrere Referenzsensoren 66 aufweist, beispielsweise jeweils zwei oder drei Referenzsensoren 66. Jeder Referenzsensor 66 der zweiten Referenzsensorgruppe 69 ist dazu eingerichtet, einen Abstand und/oder eine Abstandsänderung des Sensorträgers 50 relativ zu einer zweiten Referenzfläche 70 und/oder zu einer ersten Bezugsfläche 71 zu detektieren. Beispielsgemäß sind die Referenzsensoren 66 der zweiten Referenzsensorgruppe 69 als Tandemsensoren ausgebildet, so dass sie einen Abstand bzw. eine Abstandsänderung sowohl zur zweiten Referenzfläche 70, als auch zur ersten Bezugsfläche 71 erfassen.

Beim Ausführungsbeispiel ist die zweite Referenzfläche 70 unbeweglich mittelbar oder unmittelbar an der ersten Führung 41 angeordnet und kann beispielsweise an der Führungssäule 39 vorhanden sein (Figuren 2 und 3).

Die erste Referenzfläche 68 erstreckt sich parallel zum ersten Bewegungsfreiheitsgrad B1 und parallel zum zweiten Bewegungsfreiheitsgrad B2. Sie ist beispielsgemäß rechtwinklig zur Y-Richtung des Maschinenkoordinatensystems KM ausgerichtet.

Alternativ dazu kann die erste Referenzfläche 68 und/oder die zweite Referenzfläche 70 an einem Referenzkörper angeordnet sein. Der Referenzkörper kann an der Maschinenbasis 21 angeordnet sein und mit Abstand zur Führungssäule 39. Um Schwingungen zu vermeiden kann der Referenzkörper an zumindest einer Stützstelle schwingungsdämpfend zusätzlich an der Führungssäule 39 abgestützt sein, beispielsweise mittels eines elastisch verformbaren Dämpfungselements.

Jeder weitere Positionierkörper 42, 44, der beweglich am ersten Positionierkörper 40 gelagert ist, weist beispielsgemäß eine erste Bezugsfläche 71 auf. Die erste Bezugsfläche 71 ist zumindest bei idealer Positionierung und Ausrichtung des zweiten Positionierkörpers 42 bzw. des dritten Positionierkörpers 44 parallel zur ersten Referenzfläche 68 ausgerichtet.

Am Sensorträger 50 ist außerdem eine dritte Referenzsensorgruppe 72 angeordnet, die mehrere und beispielsgemäß zwei Referenzsensoren 66 aufweist. Die Referenzsensoren 66 der dritten Referenzsensorgruppe 72 sind dazu eingerichtet, jeweils einen Abstand und/oder eine Abstandsänderung des Sensorträgers 50 zu einer zweiten Bezugsfläche 73 und/oder einer dritten Bezugsfläche 74 zu erfassen. Bei idealer Ausrichtung sind die zweite Bezugsfläche 73 und die dritte Bezugsfläche 74 parallel zum zweiten Bewegungsfreiheitsgrad B2 und insbesondere rechtwinklig zum ersten Bewegungsfreiheitsgrad B1 ausgerichtet.

Es sei an dieser Stelle darauf hingewiesen, dass sich die Bezugsflächen 71, 73, 74 jeweils an einem der Positionierkörper und beispielsgemäß am zweiten Positionierkörper 42 oder am dritten Positionierkörper 44 befinden. Die Ausrichtung der Bezugsflächen 71, 73, 74 kann daher durch thermische oder andere äußere Einflüsse, die sich beispielsweise auf die zweite Führung 43 oder die dritte Führung 45 auswirken, beeinflusst werden. Die erwähnte Ausrichtung der Bezugsflächen 71, 73, 74 relativ zum Maschinenkoordinatensystem KM bezieht sich stets auf den Idealfall bzw. die gewünschte Sollausrichtung dieser Bezugsflächen 71, 73, 74. Wenn einer der Positionierkörper 42, 44 durch einen äußeren Einfluss um eine oder mehrere Achsen kippt, ändert sich dadurch auch die Ausrichtung der betreffenden Bezugsflächen 71, 73, 74 im Maschinenkoordinatensystem KM und weicht von der idealen Ausrichtung ab. Dies kann mittels der zugeordneten Referenzsensoren 66 detektiert werden.

Wenn eine Referenzsensorgruppe 67, 69, 72 mehrere Referenzsensoren 66 aufweist, die einer gemeinsamen Messfläche 75 (Referenzfläche oder Bezugsfläche) zugeordnet sind, können auch Kippbewegungen des Sensorträgers 50 relativ zu dieser Messfläche 75 um eine oder mehrere Achsen erkannt werden, die sich parallel zur jeweiligen Messfläche 75 erstrecken. Beispielsweise kann mittels der zwei Referenzsensoren 66 der ersten Referenzsensorgruppe 67 eine Kippbewegung des Sensorträgers 50 um die Y-Richtung detektiert werden.

Innerhalb der zweiten Referenzsensorgruppe 69 sind mehrere Referenzsensoren 66 der ersten Bezugsfläche 71 am zweiten Positionierkörper 42 sowie mehrere andere Referenzsensoren 66 der ersten Bezugsfläche 71 am dritten Positionierkörper 44 zugeordnet, wobei alle Referenzsensoren 66 der zweiten Referenzsensorgruppe 69 außerdem der zweiten Referenzfläche 70 zugeordnet sind. Insgesamt weist die zweite Referenzsensorgruppe 69 beim Ausführungsbeispiel fünf Referenzsensoren 66 auf, wobei drei mit der ersten Bezugsfläche 71 des zweiten Positionierkörpers 42 und zwei mit der ersten Bezugsfläche 71 des dritten Positionierkörpers 44 zusammenarbeiten. Dadurch ist es möglich, den Abstand und die Orientierung des Sensorträgers 50 relativ zur zweiten Referenzfläche 70 und den Abstand und die Orientierung der beiden ersten Bezugsflächen 71 relativ zum Sensorträger 50 zu ermitteln. Dadurch lässt sich direkt ein Bezug bezüglich des Abstands und der Orientierung zwischen den ersten Bezugsflächen 71 und der zweiten Referenzfläche 70 herstellen.

Beim hier dargestellten Ausführungsbeispiel kann mittels der drei Referenzsensoren 66, die der ersten Bezugsfläche 71 des zweiten Positionierkörpers 42 zugeordnet sind, sowohl eine Kippbewegung um die X-Richtung, als auch eine Kippbewegung um die Z-Richtung detektiert werden. Der ersten Bezugsfläche 71 des dritten Positionierkörpers 44 sind in X-Richtung versetzt zueinander angeordnete Referenzsensoren 66 zugeordnet, die eine Kippbewegung der ersten Bezugsfläche 71 des dritten Positionierkörpers 44 um die Z-Richtung erfassen können. Die zweite Referenzsensorgruppe 69 weist vorzugsweise für jede zugeordnete erste Bezugsfläche 71 jeweils zwei Referenzsensoren 66 auf, die zumindest in einer Raumrichtung des Maschinenkoordinatensystems KM versetzt zueinander angeordnet sind, oder weist drei Referenzsensoren 66 auf, die in zwei Raumrichtung des Maschinenkoordinatensystems KM versetzt zueinander angeordnet sind (beispielsweise in einer Dreiecksanordnung).

In der dritten Referenzsensorgruppe 72 sind beispielsgemäß zwei Referenzsensoren 66 vorhanden, die in X-Richtung, also in Richtung des zweiten Bewegungsfreiheitsgrades B2, mit Abstand zueinander angeordnet sind. Mittels dieser Referenzsensoren 66 der dritten Referenzsensorgruppe 72 kann somit der Abstand zwischen der zweiten Bezugsfläche 73 und der dritten Bezugsfläche 74 und mithin zwischen dem zweiten Positionierkörper 42 und dem dritten Positionierkörper 44 ermittelt sowie eine Kippbewegung dieser Bezugsflächen 73, 74 um die Y-Richtung detektiert werden.

Jeder Referenzsensor 66 übermittelt ein den jeweils gemessenen Abstand bzw. die jeweils gemessene Abstandsänderung beschreibendes Referenzsensorsignal Rj (j = 1, 2, 3, ..., m) an die Steuereinrichtung 35 (Figur 1).

Die Steuereinrichtung 35 ist dazu eingerichtet, basierend auf dem Messsignal M, den Positionssensorsignalen P1 bis P3 sowie den Referenzsensorsignalen Rj den Messwert W zu ermitteln. Die Positionssignale P1 bis P3 können dabei basierend auf den Referenzsensorsignalen Rj korrigiert werden, um eine genauere Ermittlung der Position der Werkstück-Messeinheiten 25 im Maschinenkoordinatensystem KM zu ermöglichen.

Die Referenzsensoren 66 und der oder die Positionssensoren 60, 62, 64, die einer gemeinsamen Richtung im Maschinenkoordinatensystem KM zugeordnet sind, messen beispielsgemäß in einer gemeinsamen Ebene. Hierzu sind beispielsweise der erste Maßstab 61 und die erste Referenzfläche 68 in einer gemeinsamen Ebene angeordnet. Zusätzlich oder alternativ sind der zweite Maßstab 63 und die erste Bezugsfläche 71 am zweiten Positionierkörper 42 in einer gemeinsamen Ebene angeordnet. Zusätzlich oder alternativ sind der dritte Maßstab 65 und die erste Bezugsfläche 71 am dritten Positionierkörper 44 in einer gemeinsamen Ebene angeordnet.

Außerdem kann eine Ebene, in der sich die zweite Bezugsfläche 73 erstreckt oder eine Ebene, in der sich die dritte Bezugsfläche 74 erstreckt, eine Symmetrieebene sein, die sich mittig durch den ersten Positionssensor 60 erstreckt (vgl. Figur 2). Eine Ebene, in der sich die erste Referenzfläche 68 erstreckt, bildet vorzugsweise eine Symmetrieebene, die sich mittig durch den zweiten Positionssensor 62 sowie den dritten Positionssensor 64 erstreckt (vgl. Figur 3).

Jeder Referenzsensor 66 hat wenigstens ein Sensorelement 77. Jedes Sensorelement 77 hat eine Sensorfläche 78, die der jeweils zugeordneten Messfläche 75 zugewandt ist und dieser mit geringem Abstand gegenüberliegt. Beispielsgemäß haben die Referenzsensoren 66 der ersten Referenzsensorgruppe 67 jeweils genau ein Sensorelement 77, das mit der zugeordneten ersten Referenzfläche 68 zusammenarbeitet.

Ein Referenzsensor 66 kann auch zwei separate Sensorelemente 77 aufweisen. Beim Ausführungsbeispiel haben alle Referenzsensoren 66 der zweiten Referenzsensorgruppe 69 und der dritten Referenzsensorgruppe 72 jeweils zwei Sensorelemente 77, die unterschiedlichen Messflächen 75 (Referenzfläche oder Bezugsfläche) zugeordnet sind.

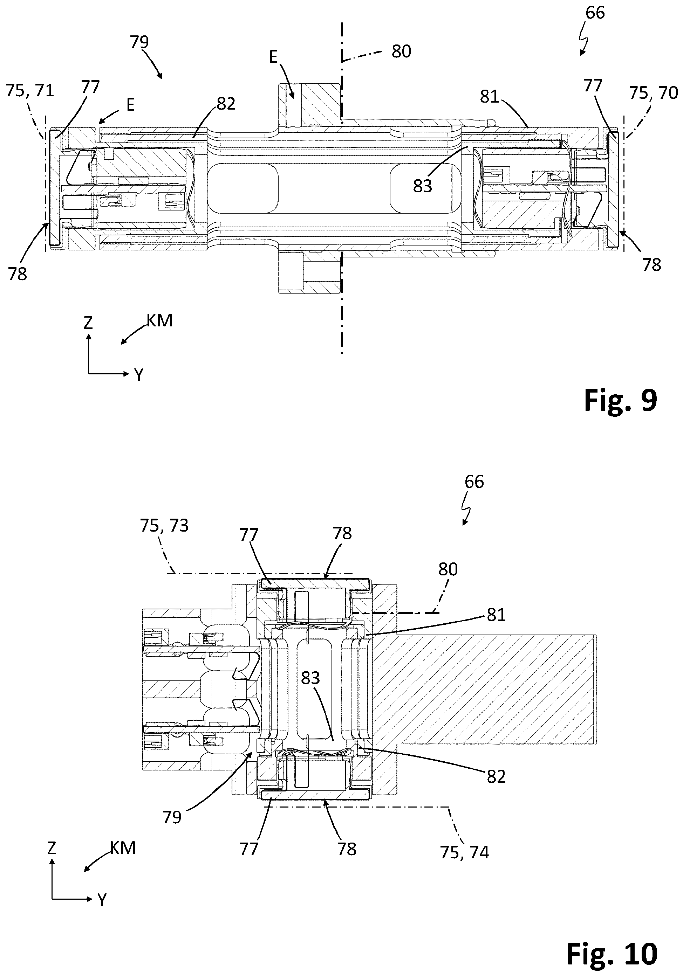

Ein Ausführungsbeispiel für einen Referenzsensor 66 der zweiten Referenzsensorgruppe 69 ist in Figur 9 und ein Ausführungsbeispiel für einen Referenzsensor 66 der dritten Referenzsensorgruppe 72 ist in Figur 10 dargestellt. Diese Referenzsensoren 66 haben jeweils ein Sensorgehäuse 79, das an einer Befestigungsstelle 80 am Sensorträger 50 befestigt ist. Insbesondere ist das Sensorgehäuse 79 ausschließlich an dieser einen Befestigungsstelle 80 am Sensorträger 50 fixiert. Im Anschluss an die Befestigungsstelle 80 kann das Sensorgehäuse 79 eine Längenausdehnung erfahren, wodurch sich der Abstand der Sensorelemente 77 zur Befestigungsstelle 80 ändern kann. Die Befestigungsstelle 80 ist in den Figuren 9 und 10 durch eine strichpunktierte Ebene dargestellt.

Ausgehend von der Befestigungsstelle 80 bis zu einer zugeordneten Messfläche 75 (Referenzfläche oder Bezugsfläche) eines der beiden Sensorelemente 77 hat das Sensorgehäuse 79 eine thermische Längenausdehnung, die der thermischen Längenausdehnung des Sensorträgers 50 und der sich daran anschließenden Komponenten der Messmaschine (z.B. Bestandteil einer Führung 41, 43, 45 oder eines damit verbundenen Bauteils) im Wesentlichen entspricht, so dass sich die Längenausdehnungen im Wesentlichen vollständig ausgleichen.

Bezugnehmend auf Figur 10 ist beispielsweise die Längenausdehnung in Z-Richtung zwischen der Befestigungsstelle 80 der Referenzsensoren 66 der dritten Referenzsensorgruppe 72 und der zweiten Bezugsfläche 73 im Wesentlichen durch die Lagereinheiten 52 definiert, deren Graden G sich in Z-Richtung erstrecken und die den Sensorträger 50 in Z-Richtung lagern. Die Lagereinheiten 52 bestehen beispielsweise aus Stahl oder einer Stahllegierung und haben einen entsprechenden Längenausdehnungskoeffizienten. Das Sensorgehäuse 79 jedes Referenzsensors 66 der dritten Referenzsensorgruppe 72 ist zwischen der Befestigungsstelle 80 und dem der zweiten Bezugsfläche 73 zugeordneten Sensorelement 77 ebenfalls aus Stahl oder der Stahllegierung entsprechend der Lagereinheiten 52 hergestellt, so dass der Betrag der Längenausdehnung von der Befestigungsstelle 80 bis zu diesem Sensorelement 77 betragsmäßig gleichgroß ist. Dehnt sich das Material aufgrund einer Erwärmung aus, nimmt der Abstand der beiden Stützstellen 53 zu, wodurch sich der Abstand zwischen der Befestigungsstelle 80 und der zweiten Bezugsfläche 73 vergrößert. Im gleichen Maße dehnt sich das Sensorgehäuse 79 von der Befestigungsstelle 80 zum Sensorelement 77 aus, das der zweiten Bezugsfläche 73 zugeordnet ist, so dass die thermische Längenausdehnung in Z-Richtung bezüglich der zweiten Bezugsfläche 73 kompensiert ist.

Dasselbe gilt für die Referenzsensoren 66 der ersten Referenzsensorgruppe 67, deren Sensorgehäuse 79 zwischen einer Befestigungsstelle 80 und dem (einzigen) Sensorelement 77 im Wesentlichen aus demselben Stahl oder derselben Stahllegierung besteht, wie die Lagereinheit 52, die den Sensorträger 50 in X-Richtung am ersten Positionierkörper 40 abstützt.

Bei dem in Figur 9 dargestellten Ausführungsbeispiel des Referenzsensors 66 der zweiten Referenzsensorgruppe 69 entspricht die Längenausdehnung zwischen der Befestigungsstelle 80 und der zweiten Referenzfläche 70 dem Material, aus dem der Sensorträger 50, der erste Positionierkörper 40 sowie die erste Führung 41 besteht, die sich zwischen der Befestigungsstelle 80 und der zweiten Referenzfläche 70 aneinander anschließen. Beim Ausführungsbeispiel können diese Materialien z.B. Stahl oder eine Stahllegierung für die erste Führung 41 und Aluminium oder eine Aluminiumlegierung für den Sensorträger 50 und zumindest Teile des ersten Positionierkörpers 40 sein. Das Sensorgehäuse 79 des Referenzsensors 66 der zweiten Referenzsensorgruppe 69 ist zwischen der Befestigungsstelle 80 und dem der zweiten Referenzfläche 70 zugeordneten Sensorelement 77 aus einem Material aufgebaut, das denselben thermischen Ausdehnungskoeffizienten hat wie die Materialkombination des Sensorträgers 50, des ersten Positionierkörpers 40 und der ersten Führung 41 zwischen der Befestigungsstelle 80 und der zweiten Referenzfläche 70. Hier können beispielsweise anteilig dieselben Materialien verwendet werden und das Sensorgehäuse 79 ebenfalls aus einer Kombination von Aluminium bzw. Aluminiumlegierung und Stahl bzw. einer Stahllegierung aufgebaut werden. Durch eine thermische Ausdehnung wird der Abstand zwischen der Befestigungsstelle 80 und der zweiten Referenzfläche 70 größer, wobei sich das Sensorgehäuse 79 zwischen der Befestigungsstelle 80 und dem Sensorelement 77 in gleichem Maße ausdehnt, so dass die Relativposition zwischen der zweiten Referenzfläche 70 und dem damit zusammenarbeitenden Sensorelement 77 unabhängig von thermischen Einflüssen gleichbleibt, zumindest im Wesentlichen.

Bei den Ausführungsbeispielen der Referenzsensoren 66 gemäß der Figuren 9 und 10 weist das Sensorgehäuse 79 außerdem mehrere Gehäuseteile und beispielsweise jeweils drei Gehäuseteile 81, 82, 83 auf, die derart bewegbar oder verschiebbar miteinander verbunden sind, dass sie relativ zueinander eine thermische Längenänderung erfahren können. Die Gehäuseteile 81, 82, 83 können rohr- oder hülsenförmig sein. Sie können beispielsweise koaxial zueinander angeordnet sein. Alternativ hierzu können sie auch auf einer anderen Art und Weise relativ zueinander angeordnet und/oder verbunden sein, so dass sie thermische Einflüsse zumindest überwiegend oder vollständig kompensieren.

Das Prinzip dieses verschachtelten Aufbaus der Gehäuseteile 81, 82, 83 ist stark schematisiert und lediglich zur Erläuterung des Funktionsprinzips in Figur 8 veranschaulicht. In Figur 8 ist Aluminium bzw. eine Aluminiumlegierung als Material für ein Gehäuseteil durch eine kreuzschraffierte Fläche und Stahl oder eine Stahllegierung für ein Gehäuseteil durch eine gepunktet gefüllte Fläche schematisch symbolisiert. Dabei gilt, dass der thermische Ausdehnungskoeffizient von Aluminium oder der Aluminiumlegierung doppelt so groß ist, wie der von Stahl oder der Stahllegierung. Anstelle von Aluminium und Stahl könnten auch andere Materialkombinationen verwendet werden, deren thermische Ausdehnungskoeffizienten im Wesentlichen das Verhältnis 2:1 haben.

An einem äußeren Gehäuseteil 81 ist eines der Sensorelemente 77 an einem Ende befestigt. Das in Erstreckungsrichtung dieses äußeren Gehäuseteils 81 entgegengesetzte Ende ist an einer ersten Verbindungsstelle 84 fest mit einem benachbarten Ende eines mittleren Gehäuseteils 82 verbunden. Auf der in Erstreckungsrichtung entgegengesetzten Seite ist das mittlere Gehäuseteil 82 an einer zweiten Verbindungsstelle 85 mit einem inneren Gehäuseteil 83 fest verbunden. Ausgehend von dieser zweiten Verbindungsstelle 85 erstreckt sich das innere Gehäuseteil 83 zu einem entgegengesetzten Ende hin, an dem das jeweils andere Sensorelement 77 des Referenzsensors 66 befestigt ist. Die drei Gehäuseteile 81, 82, 83 sind nur an den beiden Verbindungsstellen 84, 85 miteinander verbunden und können sich ansonsten durch thermische Einwirkung relativ zueinander verlängern oder verkürzen und sozusagen paarweise teleskopähnlich gegeneinander verschieben.

Das mittlere Gehäuseteil 82 hat gegenüber dem äußeren Gehäuseteil 81 und dem inneren Gehäuseteil 83 einen in etwa doppelt so großen thermischen Ausdehnungskoeffizienten. Thermische Einflüsse werden daher durch die drei Gehäuseteile 81, 82, 83 zumindest im Wesentlichen kompensiert, so dass sich eine Gesamtlänge L des Referenzsensors 66 von der Sensorfläche 78 des einen Sensorelements 77 zur Sensorfläche 78 des jeweils anderen Sensorelements 77 durch thermische Einflüsse nicht oder nur unwesentlich ändert.

Das anhand von Figur 8 geschilderte Prinzip kann für alle Referenzsensoren 66 angewandt werden, die zwei Sensorelemente 77 aufweisen.

Optional kann mindestens ein Dämpfungselement in einem Spalt und/oder einer Öffnung zwischen jeweils zwei relativ zueinander bewegbaren Teilen des Sensorgehäuse 79 angeordnet werden, beispielsweise zur Dämpfung der Relativbewegung von jeweils zwei Gehäuseteilen 81, 82, 83. Beispielsweise kann ein fließfähiges Dämpfungsmaterial in einen Spalt und/oder eine Öffnung eingebracht und ausgehärtet werden. Das ausgehärtete Dämpfungsmaterial bzw. das Dämpfungselement lässt eine Relativbewegung der jeweils betreffenden Gehäuseteile 81, 82, 83 relativ zueinander zu, sorgt aber für eine elastische Dämpfung. Das Dämpfungsmaterial bzw. das Dämpfungselement kann beispielsweise aus Silikon bestehen. Beispielsweise kann das wenigstens eine Dämpfungselement und/oder Dämpfungsmaterial E an den in Figuren 9 und 10 gekennzeichneten angegebenen Stellen angeordnet werden. Zusätzlich oder alternativ kann das wenigstens eine Dämpfungselement und/oder Dämpfungsmaterial E auch an einer oder mehreren anderen Positionen angeordnet oder eingebracht werden. Das Sensorgehäuse 79 kann dazu entsprechende von außen zugängliche Öffnungen aufweisen.

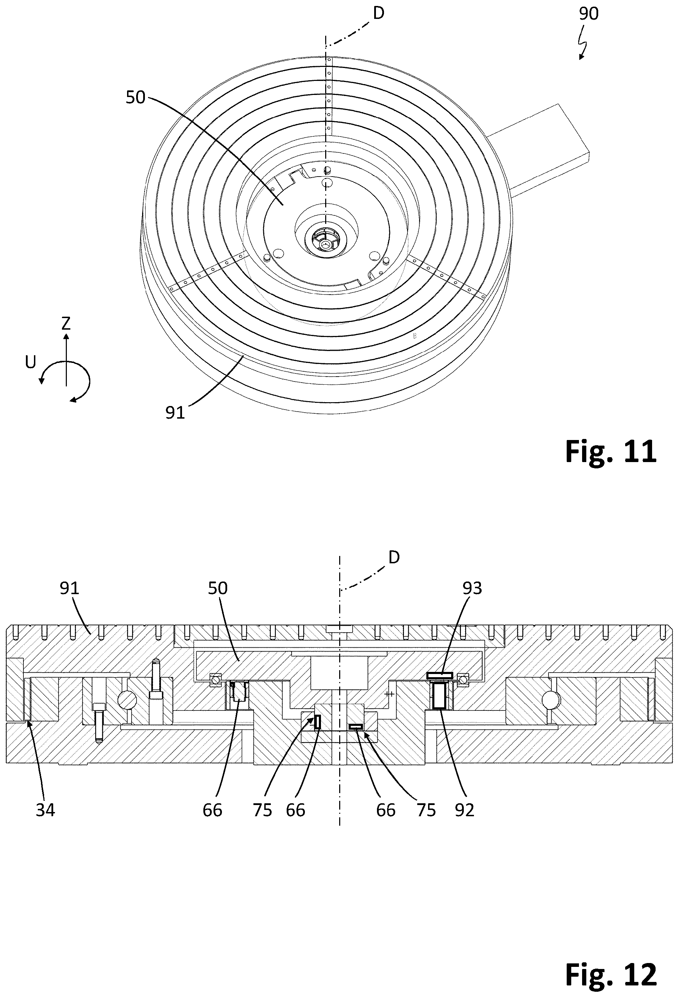

Bei den bisherigen Ausführungsbeispielen sind die Bewegungsfreiheitsgrade B1, B2 translatorische Freiheitsgrade. Einer der Bewegungsfreiheitsgrade und beispielsweise der erste Bewegungsfreiheitsgrad B1 kann auch ein rotatorischer Freiheitsgrad sein. Dies kann am Beispiel einer als Rotationsmaschinenachse 90 ausgebildeten Maschinenachse der Messmaschine 20 erläutert werden, wie sie anhand der Figuren 11-14 veranschaulicht ist. Eine solche Rotationsmaschinenachse 90 kann zur Bewegung und Positionierung des Werkstückhalters 22 und/oder zur Bewegung und Positionierung einer Werkstück-Messeinheit 25 in der Messmaschine 20 eingesetzt werden.

Die Rotationsmaschinenachse 90 hat einen in einer Umfangsrichtung U um eine Drehachse D drehbar antreibbaren Positionierkörper 91, der beispielsweise ringförmig oder plattenförmig ausgeführt sein kann. Der Positionierkörper 91 kann aber auch beliebige andere geometrische Formen aufweisen. Er muss keine in Umfangsrichtung U geschlossene Form um die Drehachse D aufweisen.

Beim Ausführungsbeispiel wird der Positionierkörper 91 über einen zugeordneten Achsantrieb 34 angetrieben, der beispielsweise als Direktantrieb ausgeführt sein kann (Figur 12).

Die Rotationsmaschinenachse 90 hat einen Positionssensor, der als Rotationspositionssensor 92 bezeichnet werden kann. Der Rotationspositionssensor 92 ist dazu eingerichtet, eine Bewegung und/oder eine Position des Positionierkörpers 91 in Umfangsrichtung U um die Drehachse D zu erfassen. Hierzu kann er beispielsweise mit einem sich ringförmig um die Drehachse D erstreckenden Ringmaßstab 93 zusammenarbeiten, wobei der Ringmaßstab 93 beispielsweise drehfest mit dem Positionierkörper 91 der Rotationsmaschinenachse 90 verbunden sein kann (Figur 12). Der Rotationspositionssensor 92 stellt ein Rotationspositionssignal bereit, das analog zu den anderen Positionssignalen P1-P3 der Steuereinrichtung 35 übermittelt werden kann (Figur 12). Der Ringmaßstab 93 kann radial und/oder axial relativ zur Drehachse D ausgerichtet sein. Der Rotationspositionssensor 92 kann somit, z.B. radial benachbart oder auch axial benachbart zum Sensorträger 50 angeordnet werden, abhängig von der Bauform der Rotationsmaschinenachse 90 und den zur Verfügung stehenden Bauräumen.

An dem Positionierkörper 91 ist mittels der Lageranordnung 51 wiederum aufweisend sechs individuelle Lagereinheiten 52 der Sensorträger 50 exakt statisch bestimmt am Positionierkörper 91 gelagert. Der Sensorträger 50 ist bei diesem Ausführungsbeispiel kreisförmig oder ringförmig und konzentrisch oder koaxial zur Drehachse D angeordnet. Die Lageranordnung 51 ist auch bei diesem Ausführungsbeispiel analog zu den bisher beschriebenen Ausführungsbeispielen der Messmaschine 20 ausgebildet.

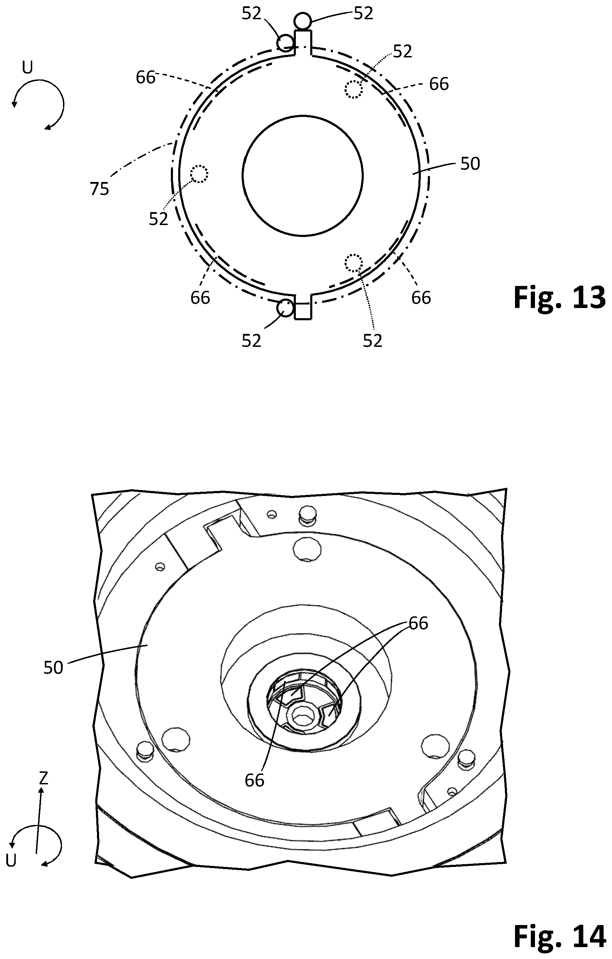

Der Sensorträger 50 und die Lageranordnung 51 sind schematisch in Figur 13 dargestellt. Mittels dreier Lagereinheiten 52 wird der Sensorträger 50 in einer Richtung parallel zur Drehachse D abgestützt. An zwei in etwa diametral gegenüberliegenden Stellen wird der Sensorträger 50 in Umfangsrichtung U bzw. tangential zur Umfangsrichtung U durch jeweils eine Lagereinheit 52 abgestützt. An einer Stelle wird der Sensorträger 50 rechtwinklig oder radial zur Drehachse D durch eine einzige Lagereinheit 52 abgestützt. Die Relativposition des Sensorträgers 50 relativ zum Positionierkörper 91 der Rotationsmaschinenachse 90 ist daher statisch bestimmt, aber nicht überbestimmt. Die Lagereinheiten 52 der Lageranordnung 51 haben einen Aufbau, wie er in Figur 7 dargestellt ist, so dass auf die vorstehende Beschreibung Bezug genommen werden kann.

An dem Sensorträger 50 sind mehrere Referenzsensoren 66 vorhanden, wobei zumindest ein Referenzsensor 66 radial zur Drehachse D mit einer zugeordneten die Drehachse D ringförmig umschließenden erste Messfläche 75 zusammenarbeitet, die eine im Maschinenkoordinatensystem KM unbewegliche Referenzfläche oder eine an einem anderen beweglichen Positionierkörper angeordnete Bezugsfläche sein kann.

Außerdem ist an dem Sensorträger 50 wenigsten ein in axialer Richtung messender Referenzsensor 66 angeordnet, der mit einer benachbarten zweiten Messfläche 75 zusammenarbeitet, die eine im Maschinenkoordinatensystem KM unbewegliche Referenzfläche oder eine an einem beweglichen Positionierkörper angeordnete Bezugsfläche sein kann.

Bei dem hier veranschaulichten Ausführungsbeispiel sind wenigstens drei in Axialrichtung messende Referenzsensoren 66 und wenigstens drei oder vier in Radialrichtung messende Referenzsensoren 66 vorhanden. Mittels der axialmessenden Referenzsensoren 66 können Taumelfehler und mittels der radialmessenden Referenzsensoren 66 können Exzenterfehler bei der Bewegung des Positionierkörpers 91 um die Drehachse D detektiert werden.

Die Erfindung betrifft eine Messmaschine 20 mit wenigstens einer translatorischen oder rotatorischen Maschinenachse, um einen Werkstückhalter 22 und eine Werkstück-Messeinheit 25 der Messmaschine 20 relativ zueinander zu bewegen und/oder zu positionieren. Die wenigstens eine Maschinenachse hat hierzu einen in einem translatorischen oder rotatorischen Bewegungsfreiheitsgrad B1, B2 an einer zugeordneten Führung gelagerten Positionierkörper 40, 42, 44, 91, an dem ein Sensorträger 50 über eine Lageranordnung 51 gelagert ist. Die Lageranordnung 51 ist dazu eingerichtet, eine statisch bestimmte Lagerung des Sensorträgers 50 am Positionierkörper 40, 91 zu bewirken und gleichzeitig eine verspannungsfreie Lagerung zu gewährleisten. Auf diese Weise wird vermieden, dass Torsionen oder andere Verformungen des Positionierkörpers 40, 91, an dem der Sensorträger dem Werkstückhalter 22 und der Werkstück-Messeinheit 25 erfolgen.

### Bezugszeichenliste:

- 20: Messmaschine
- 21: Maschinenbasis
- 22: Werkstückhalter
- 23: Werkstück
- 24: Drehteller
- 25: Werkstück-Messeinheit
- 26: Taster
- 27: optische Messeinrichtung

- 30: erste Maschinenachse
- 31: zweite Maschinenachse
- 32: dritte Maschinenachse
- 33: vierte Maschinenachse
- 34: Achsantrieb
- 35: Steuereinrichtung

- 39: Führungssäule
- 40: erster Positionierkörper
- 41: erste Führung
- 42: zweiter Positionierkörper
- 43: zweite Führung
- 44: dritter Positionierkörper
- 45: dritte Führung

- 50: Sensorträger
- 51: Lageranordnung
- 52: Lagereinheit
- 53: Stützstelle
- 54: Wälzelement
- 55: Stützfläche
- 56: Lagerhülse

- 60: erster Positionssensor
- 61: erster Maßstab
- 62: zweiter Positionssensor
- 63: zweiter Maßstab
- 64: dritter Positionssensor
- 65: dritter Maßstab
- 66: Referenzsensor
- 67: erste Referenzsensorgruppe
- 68: erste Referenzfläche
- 69: zweite Referenzsensorgruppe
- 70: zweite Referenzfläche
- 71: erste Bezugsfläche
- 72: dritte Referenzsensorgruppe
- 73: zweite Bezugsfläche
- 74: dritte Bezugsfläche
- 75: Messfläche

- 77: Sensorelement
- 77: Sensorfläche
- 79: Sensorgehäuse
- 80: Befestigungsstelle
- 81: äußeres Gehäuseteil
- 82: mittleres Gehäuseteil
- 83: inneres Gehäuseteil
- 84: erste Verbindungsstelle
- 85: zweite Verbindungsstelle

- 90: Rotationsmaschinenachse
- 91: Positionierkörper der Rotationsmaschinenachse
- 92: Rotationspositionssensor
- 93: Ringmaßstab

- A: Lager- oder Stützrichtung
- B1: erster Bewegungsfreiheitsgrad
- B2: zweiter Bewegungsfreiheitsgrad
- D: Drehachse
- G: Gerade
- KM: Maschinenkoordinatensystem
- L: Länge des Referenzsensors
- M: Messsignal
- P1: erstes Positionssignal
- P2: zweites Positionssignal
- P3: drittes Positionssignal
- Rj: Referenzsensorsignal
- Si: Steuersignal
- U: Umfangsrichtung
- W: Messwert
- X: X-Richtung
- Y: Y-Richtung
- Z: Z-Richtung

## Patentansprüche

1. Messmaschine (20) aufweisend:
- wenigstens eine Maschinenachse (30, 31, 32), wobei jede Maschinenachse (30, 31, 32) einen Positionierkörper (40, 42, 44) aufweist, der in einem translatorischen oder rotatorischen Bewegungsfreiheitsgrad (B1, B2) entlang einer jeweils zugeordneten Führung (41, 43, 45) bewegbar gelagert und in dem Bewegungsfreiheitsgrad (B1, B2) positionierbar ist, wobei eine erste Maschinenachse (30) eine erste Führung (41) und einen ersten Positionierkörper (40) aufweist, der in einem translatorischen oder rotatorischen ersten Bewegungsfreiheitsgrad (B1) bewegbar und positionierbar ist,
- einen Werkstückhalter (22), der dazu eingerichtet ist, ein Werkstück (23) zu halten, und eine Werkstück-Messeinheit (25), die dazu eingerichtet ist, durch berührendes oder berührungsloses Antasten des Werkstücks (23) wenigstens ein Messsignal (M) zu erzeugen, wobei der Werkstückhalter (22) und die Werkstück-Messeinheit (25) mittels der wenigstens einen Maschinenachse (30, 31, 32) relativ zueinander bewegbar und/oder positionierbar sind,
- einen Sensorträger (50),
- eine als Loslagerung ausgeführte Lageranordnung (51) mittels der der Sensorträger (50) am ersten Positionierkörper (40) gelagert ist, und
- einen am Sensorträger (50) angeordneten ersten Positionssensor (60), der dazu eingerichtet ist, eine Bewegung und/oder eine Position des Sensorträgers (50) im ersten Bewegungsfreiheitsgrad (B1) zu erfassen.

2. Messmaschine nach Anspruch 1, aufweisend eine Maschinenbasis (21), die ein Maschinenkoordinatensystem (KM) definiert.

3. Messmaschine nach Anspruch 2, außerdem aufweisend wenigstens einen am Sensorträger (50) angeordneten Referenzsensor (66), der dazu eingerichtet ist, einen Abstand und/oder eine Abstandsänderung des Sensorträgers (50) zu einer Messfläche (75) zu erfassen, wobei die Messfläche (75) eine relativ zum Maschinenkoordinatensystem (KM) unbewegliche Referenzfläche (68, 70) oder eine Bezugsfläche (70, 71, 73), an einem relativ zum Maschinenkoordinatensystem (KM) beweglichen Positionierkörper (42, 44) sein kann.

4. Messmaschine nach Anspruch 3, außerdem aufweisend eine am Sensorträger (50) angeordnete erste Referenzsensorgruppe (67) mit wenigstens einem Referenzsensor (66), wobei jeder Referenzsensor (66) der ersten Referenzsensorgruppe (67) dazu eingerichtet ist, einen Abstand und/oder eine Abstandsänderung des Sensorträgers (50) zu einer ersten Referenzfläche (68) zu erfassen, die parallel zum ersten Bewegungsfreiheitsgrad (B1) ausgerichtet ist.

5. Messmaschine nach Anspruch 4, außerdem aufweisend einen sich in Richtung des ersten Bewegungsfreiheitsgrades (B1) erstreckenden ersten Maßstab (61), der relativ zum Maschinenkoordinatensystem (KM) und/oder zur ersten Führung (41) unbeweglich angeordnet ist und der zur Zusammenarbeit mit dem ersten Positionssensor (60) eingerichtet ist, wobei der erste Maßstab (61) und die erste Referenzfläche (68) in einer gemeinsamen Ebene oder in zueinander versetzten, parallelen Ebenen oder in rechtwinkelig zueinander ausgerichteten Ebenen angeordnet sind.

6. Messmaschine nach Anspruch 4 oder 5, außerdem aufweisend eine am Sensorträger (50) angeordnete zweite Referenzsensorgruppe (69) mit wenigstens einem Referenzsensor (66), wobei jeder Referenzsensor (66) der zweiten Referenzsensorgruppe (69) dazu eingerichtet ist, einen Abstand und/oder eine Abstandsänderung des Sensorträgers (50) zu einer zweiten Referenzfläche (70) zu erfassen, wobei die zweite Referenzfläche (70) parallel zum ersten Bewegungsfreiheitsgrad (B1) ausgerichtet und relativ zum Maschinenkoordinatensystem (KM) und/oder zur ersten Führung (41) unbeweglich angeordnet ist, wobei die erste Referenzfläche (68) rechtwinkelig zur zweiten Referenzfläche (70) ausgerichtet ist.

7. Messmaschine nach einem der vorhergehenden Ansprüche, außerdem aufweisend:
- eine zweite Maschinenachse (31) mit einer zweiten Führung (43) und einem zweiten Positionierkörper (42), der in einem translatorischen oder rotatorischen zweiten Bewegungsfreiheitsgrad (B2) bewegbar an der zweiten Führung (43) gelagert und in dem zweiten Bewegungsfreiheitsgrad (B2) positionierbar ist, wobei die zweite Führung (43) am ersten Positionierkörper (40) angeordnet ist,
- einen zweiten Positionssensor (62), der dazu eingerichtet ist, eine Bewegung und/oder eine Position des zweiten Positionierkörpers (42) im zweiten Bewegungsfreiheitsgrad (B2) zu erfassen.

8. Messmaschine nach Anspruch 7, außerdem aufweisend:
- eine dritte Maschinenachse (32) mit einer dritten Führung (45) und einem dritten Positionierkörper (44), der parallel zum zweiten Positionierkörper (42) im zweiten Bewegungsfreiheitsgrad (B2) bewegbar an der dritten Führung (45) gelagert und in dem zweiten Bewegungsfreiheitsgrad (B2) positionierbar ist, wobei die dritte Führung (45) am ersten Positionierkörper (40) angeordnet ist,
- einen dritten Positionssensor (65), der dazu eingerichtet ist, eine Bewegung und/oder eine Position des dritten Positionierkörpers (45) im zweiten Bewegungsfreiheitsgrad (B2) zu erfassen.

9. Messmaschine nach Anspruch 6 und nach Anspruch 7 oder 8, wobei jeder Referenzsensor (66) der zweiten Referenzsensorgruppe (69) dazu eingerichtet ist, einen Abstand und/oder eine Abstandsänderung des Sensorträgers (50) zu einer ersten Bezugsfläche (71) am zweiten oder dritten Positionierkörper (42, 44) zu erfassen.

10. Messmaschine nach Anspruch 9, aufweisend einen sich parallel zum zweiten Bewegungsfreiheitsgrad (B2) erstreckenden zweiten Maßstab (63) am zweiten Positionierkörper (42), der dazu eingerichtet ist, mit dem zweiten Positionssensor (62) zusammenzuarbeiten und/oder einen sich parallel zum zweiten Bewegungsfreiheitsgrad (B2) erstreckenden dritten Maßstab (65) am dritten Positionierkörper (44), der dazu eingerichtet ist, mit dem dritten Positionssensor (64) zusammenzuarbeiten, wobei die erste Bezugsfläche (71) und der zweite Maßstab (63) und/oder der dritte Maßstab (65) in einer gemeinsamen Ebene oder in zueinander versetzten, parallelen Ebenen oder in rechtwinkelig zueinander ausgerichteten Ebenen angeordnet sind.

11. Messmaschine nach einem der Ansprüche 6 bis 10, außerdem aufweisend eine am Sensorträger (50) angeordnete dritte Referenzsensorgruppe (72) mit wenigstens einem Referenzsensor (66), wobei jeder Referenzsensor (66) der dritten Referenzsensorgruppe (72) dazu eingerichtet ist, einen Abstand und/oder eine Abstandsänderung des Sensorträgers (50) zu einer am zweiten Positionierkörper (42) angeordneten zweiten Bezugsfläche (73) und/oder zu einer am dritten Positionierkörper (44) angeordneten dritten Bezugsfläche (74) zu erfassen.

12. Messmaschine nach einem der Ansprüche 3 bis 6 oder nach einem der Ansprüche 9 bis 11, wobei jeder Referenzsensor (66) wenigstens ein in einem Sensorgehäuse (79) angeordnetes Sensorelement (77) aufweist, wobei das Sensorgehäuse (79) an einer Befestigungsstelle (80) am Sensorträger (50) befestigt ist und ausgehend von der Befestigungsstelle (80) bis zu einer Sensorfläche des Sensorelements (77) oder bis zu einer Sensorfläche eines der Sensorelemente (77) dieselbe thermische Längenausdehnung aufweist, wie der Sensorträger (50) und/oder wenigstens ein sich daran anschließendes Bauteil einer der Maschinenachsen (30, 31, 32) von der Befestigungsstelle (80) bis zu einer Messfläche (75), die diesem Sensorelement (77) zugeordnet ist.

13. Messmaschine nach einem der Ansprüche 3 bis 6 oder nach einem der Ansprüche 9 bis 12, wobei die Referenzsensoren (66) der ersten und/oder zweiten und/oder dritten Referenzsensorgruppe (67, 69, 72) zwei in einem Sensorgehäuse (79) angeordnete Sensorelemente (77) mit jeweils einer Sensorfläche aufweisen, die mit unterschiedlichen Messfläche (75) zusammenarbeiten, wobei das Sensorgehäuse (79) mehrere relativ zueinander verschiebbare Gehäuseteile (80, 81, 82) aufweist, deren thermische Längenausdehnungen sich derart gegenseitig aufheben, dass der Abstand zwischen den Sensorflächen der Sensorelementen (77) im Wesentlichen konstant ist.

14. Messmaschine nach einem der Ansprüche 3 bis 13, außerdem aufweisend eine Steuereinrichtung (35), der wenigstens ein Messsignal (M) der Werkstück-Messeinheit (25), wenigstens ein Referenzsensorsignal (Rj) eines Referenzsensors (66) und wenigstens ein Positionssensorsignal (P1, P2, P3) eines Positionssensors (60, 62, 64) bereitgestellt werden, wobei die Steuereinrichtung (35) dazu eingerichtet ist, daraus einen Messwert (W) und/oder Positionswert am Werkstück (23) zu ermitteln.

15. Messmaschine nach einem der Ansprüche 3 bis 14, wobei eine Messfläche (75), anhand derer mittels eines zugeordneten Referenzsensors (66) ein Abstand und/oder eine Abstandsänderung zum Sensorträger (50) in einer der Raumrichtungen (X, Y, Z) des Maschinenkoordinatensystems (KM) gemessen wird, innerhalb einer Ebene mit einem Positionssensor (60, 62, 64) liegt, welcher ebenso in dieselbe Raumrichtung (X, Y, Z) des Maschinenkoordinatensystems (KM) eine Position erfasst.

16. Messmaschine nach einem der vorhergehenden Ansprüche, wobei die Lageranordnung (51) zur Loslagerung des Sensorträgers (50) am ersten Positionierkörper (40) mehrere separate Lagereinheiten (52) aufweist, wobei jede Lagereinheit (52) ein und vorzugsweise genau ein Wälzelement (54) aufweist, das sich an einer Stützstelle (53) an einer Stützfläche (55) am Sensorträger (50) und an einer anderen Stützstelle (53) an einer Stützfläche (55) am ersten Positionierkörper (40) abstützt.

17. Messmaschine nach Anspruch 16, wobei jedes Wälzelement (54) in einer elastisch verformbaren Lagerhülse (56) angeordnet ist.

18. Messmaschine nach Anspruch 17, wobei die Haftreibung und/oder die Gleitreibung zwischen dem Wälzelement (54) und der Lagerhülse (56) kleiner ist als der Anrollwiderstand und/oder der Rollwiderstand des Wälzelements (54) zwischen den Stützstellen (53).

19. Messmaschine nach einem der Ansprüche 16 bis 18, wobei mehrerer Lagereinheiten (54) jeweils eine Stützstelle (53) aufweisen, die in einer gemeinsamen ersten Ebene angeordnet sind, die parallel zum ersten Bewegungsfreiheitsgrad (B1) ausgerichtet ist.

20. Messmaschine nach Anspruch 16 bis 19, wobei mehrere Lagereinheiten (54) jeweils eine Stützstelle (53) aufweisen, die in einer gemeinsamen zweiten Ebene angeordnet sind, die rechtwinkelig zum ersten Bewegungsfreiheitsgrad (B1) ausgerichtet ist.

21. Messmaschine nach Anspruch 19 oder 20, wobei zumindest eine Lagereinheit (54) vorhanden ist, deren Stützstellen (53) auf einer Geraden liegen, die sich rechtwinkelig zu der ersten Ebene oder zweiten Ebene erstreckt.
